# EUROPÄISCHE PATENTSCHRIFT

(11) **EP 1 319 890 B1**
(45) Veröffentlichungstag und Bekanntmachung des Hinweises auf die Patenterteilung: **01.10.2008**
(21) Anmeldenummer: 02027418.9
(22) Anmeldetag: 09.12.2002
(51) Int. Cl.: F22B 3/02, F22G 1/00, F28D 9/00, H01M 8/06

(54) **Vorrichtung zum Verdampfen und Überhitzen wenigstens eines Mediums sowie Brennstoffzellensystem**
Apparatus for vaporizing and superheating of at least one medium and fuel cell system
Dispositif d'évaporation et de surchauffe d'au moins un milieu et système de pile à combustible

(30) Priorität: 11.12.2001 DE 10160834
(43) Veröffentlichungstag der Anmeldung: 18.06.2003
(73) Patentinhaber: P21-Power for the 21st Century GmbH, 85649 Brunnthal/München (DE)
(72) Erfinder: Glöckle, Markus, Dr., 70192 Stuttgart (DE); Prechtl, Peter, Dr., 81241 München (DE); Bartsch, Armin, Dr., 81927 München (DE)
(74) Vertreter: Müller, Thomas

(56) Entgegenhaltungen:
- EP-A- 0 861 802
- DE-A- 10 003 273
- DE-C- 4 426 692
- US-A- 5 209 906
- US-A1- 2001 018 140

## Beschreibung

Die vorliegende Erfindung betrifft zunächst eine Vorrichtung zum Verdampfen und Überhitzen wenigstens eines Mediums gemäß dem Oberbegriff von Patentanspruch 1. Weiterhin betrifft die Erfindung ein Brennstoffzellensystem gemäß dem Oberbegriff von Patentanspruch 23.

Vorrichtungen zum Verdampfen flüssiger Medien, beziehungsweise sogenannte Verdampfer, werden in verschiedenen Bereichen der Technik, beispielsweise in der Klima- und Kühltechnik, eingesetzt. Ein zunehmend wichtigerer Bereich der Anwendung ist die Brennstoffzellentechnologie. Brennstoffzellen sind seit langem bekannt und haben insbesondere im Bereich der Automobilindustrie in den letzten Jahren erheblich an Bedeutung gewonnen. Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden.

Bei der Brennstoffzelle werden die zwischen elektrisch neutralen Molekülen oder Atomen ablaufenden Oxidations- und Reduktionsprozesse in der Regel über eine Membran räumlich getrennt. Solche Membranen haben die Fähigkeit, lonen zu leiten, Gase jedoch zurückzuhalten. Die bei der Oxidation abgegebenen Elektronen lassen sich als elektrischer Strom durch einen Verbraucher leiten, beispielsweise den Elektromotor eines Kraftfahrzeugs.

Als gasförmige Reaktionspartner für die Brennstoffzelle können beispielsweise Wasserstoff als Brennstoff und Sauerstoff als Oxidationsmittel verwendet werden. Will man die Brennstoffzelle mit einem leicht verfügbaren oder leichter zu speichernden Brennstoff wie Erdgas, Methanol, Benzin, Diesel oder anderen Kohlenwasserstoffen betreiben, muß man den Kohlenwasserstoff in einer Vorrichtung zum Erzeugen beziehungsweise Aufbereiten eines Brennstoffs zunächst in ein wasserstoffreiches Gas umwandeln.

Bei wenigstens einem Reaktorelement der Vorrichtung zum Erzeugen beziehungsweise zum Aufbereiten des Brennstoffs handelt es sich um eine Vorrichtung zum Verdampfen des verwendeten Brennstoffs. Der Verdampfer hat die Aufgabe, den Ausgangsstoff für den Brennstoff zunächst zu verdampfen, bevor dieser in dampfförmigen Zustand zur weiteren Behandlung in das nächste Reaktorelement, beispielsweise einen Reformer, eingeleitet wird.

Sofern für das Verdampfen des flüssigen Mediums nur ein Verdampfer verwendet wird, können eine Reihe von Problemen auftreten. So ist es beispielsweise denkbar, daß das zu verdampfende flüssige Medium im Verdampfer zwar teilweise verdampft wird, daß aber die entstehenden Gase, beziehungsweise Gasblasen, noch nicht verdampftes Medium in Form von Flüssigkeitstropfen zusammen mit gasförmigem Medium aus dem Verdampfer heraustreiben. Weiterhin ist es nicht immer möglich, die Temperatur des austretenden verdampften Mediums genau einzustellen. Für viele Prozesse ist es jedoch erforderlich, daß das im Verdampfer verdampfte Medium vor Eintritt in ein nächstes Reaktorelement, beispielsweise einen Reformer, eine genau definierte Temperatur aufweist und tröpfchenfrei vorliegt.

Aus diesem Grund ist es grundsätzlich bekannt, einem Verdampfer ein weiteres Reaktorelement, nämlich einen Überhitzer, nachzuschalten. Der Überhitzer hat die Aufgabe, das im Verdampfer verdampfte Medium auf eine für den nachfolgenden Prozeß erforderliche Temperatur zu erwärmen. Sollte das Medium im Verdampfer noch nicht vollständig verdampft worden sein, kann im Überhitzer gleichzeitig auch die restlose Verdampfung des Mediums erfolgen.

Die DE 44 26 692 C offenbart eine Verdampfereinheit, nach dem Oberbegriff der Anspruchs 1 die ein Medium in einer ersten Stufe zumindest teilweise verdampft. In einer zweiten Stufe wird dann eine vollständige Verdampfung und Überhitzung des Mediums erzielt. Bei der bekannten Lösung ist eine einzige Wärmetauschereinheit vorgesehen, die sowohl eine erste Verdampferstufe als auch eine zweite Verdampfer- bzw. Überhitzerstufe aufweist. Es sind daher beide Stufen in einer einzigen die Reaktionskanäle enthaltenden Folie der Wärmetauschereinheit integriert.

Die EP 0 861 802 A beschreibt eine Vorrichtung zum Reformieren von Kraftstoffen, mit einer Wärmetauschereinheit, die sowohl eine erste Verdampferstufe als auch eine zweite Verdampfer- bzw. Überhitzerstufe aufweist. Auch bei dieser bekannten Lösung sind die verschiedenen Stufen in einer Gesamteinheit kombiniert. Eine Trennung der unterschiedlichen Stufen bzw. das Weglassen oder der Austausch einer einzelnen Stufe ist nicht vorgesehen. Ferner ist eine Vermischung der beiden zugeführten zu verdampfenden Medien nicht vorgesehen.

Die US 2001/018140 A1 offenbart ein Brennstoffzellensystem mit einer Reformiereinheit. Das Brennelement umfasst übereinander gelagerte Platten, die zwischen sich jeweils einen Reaktionsspalt bilden. Die Reaktionsspalten werden jeweils durch entsprechende Aussparungen an der Oberseite der einen und der gegenüberliegenden Unterseite der benachbarten Platte gebildet.

In der DE-A-2 224 826 ist in anderem Zusammenhang ein Verfahren sowie eine Vorrichtung zum Verdampfen und Überhitzen eines Mediums, im besagten Fall eines kryogenen Mediums, beschrieben. Die Vorrichtung zum Verdampfen und Überhitzen besteht aus zwei Reaktionsstufen, wobei eine erste Reaktionsstufe als Verdampfer und eine zweite Reaktionsstufe als Überhitzer ausgebildet ist. Der Verdampfer in Form eines Wärmetauschers weist zunächst eine Durchströmeinrichtung zum Hindurchleiten des zu verdampfenden Mediums auf. Weiterhin ist eine Erhitzungseinrichtung zum Bereitstellen von Wärmeenergie vorgesehen. Über die über die Erhitzungseinrichtung bereitgestellte Wärmeenergie wird das die Durchströmeinrichtung durchströmende Medium verdampft. Dazu sind die Durchströmeinrichtung und die Erhitzungseinrichtung thermisch gekoppelt. Dem Verdampfer nachgeschaltet ist ein weiterer Wärmetauscher, der die Funktion eines Überhitzers übernimmt. Im Überhitzer wird das im Verdampfer verdampfte Medium auf ein vorbestimmtes Temperaturniveau erhitzt. Gemäß der bekannten Lehre wird dabei die Überhitzung in ähnlicher Weise wie beim Verdampfer realisiert. Wiederum ist wenigstens eine Durchströmeinrichtung zum Hindurchleiten des aus dem Verdampfer austretenden Mediums vorgesehen. Darüber hinaus verfügt der Überhitzer über eine Überhitzungseinrichtung zum Bereitstellen von Wärmeenergie zum Überhitzen des die Durchströmeinrichtung des Überhitzers durchströmenden Mediums. Auch beim als Überhitzer ausgebildeten Wärmetauscher sind die Durchströmeinrichtung und die Überhitzungseinrichtung thermisch gekoppelt.

Nachteilig bei der bekannten Lösung ist jedoch, daß die Vorrichtung zum Verdampfen und Überhitzen sehr groß ist und daher einen hohen Platzbedarf erfordert. Außerdem sind die einzelnen Reaktionsstufen der Vorrichtung räumlich weit auseinander gelegen, so daß das Medium innerhalb der Vorrichtung über entsprechende Leitungssysteme transportiert werden muß. Dies kann jedoch zu Druckverlusten führen, da das Medium mitunter lange Strecken zurücklegen muß. Zur Vermeidung von Druckverlusten sind gemäß der bekannten Lehre zusätzliche Elemente wie Pumpen, Ventile und dergleichen erforderlich.

Ausgehend vom genannten Stand der Technik liegt der vorliegenden Erfindung die Aufgabe zu Grunde, eine konstruktiv einfache Vorrichtung zum Verdampfen und Überhitzen wenigstens eines Medium bereitzustellen, die zum einen eine hohe Leistungsfähigkeit aufweist, und die zum anderen nur eines geringen Bauraumes bedarf und somit kompakt ausgebildet werden kann. Insbesondere soll auch ein zusätzliches Mischen mindestens zweier Medien möglich werden.

Diese Aufgabe wird erfindungsgemäß gelöst durch die Vorrichtung mit den Merkmalen gemäß dem unabhängigen Patentanspruch 1 sowie durch das Brennstoffzellensystem mit den Merkmalen gemäß dem unabhängigen Patentanspruch 20. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit der erfindungsgemäßen Vorrichtung beschreiben sind, gelten dabei selbstverständlich auch für das erfindungsgemäße Brennstoffzellensystem, und umgekehrt.

Gemäß dem ersten Aspekt der Erfindung wird eine Vorrichtung zum Verdampfen und Überhitzen wenigstens eines Mediums bereitgestellt, mit wenigstens zwei Reaktionsstufen, wobei wenigstens eine erste Reaktionsstufe als Verdampfer zum zumindest teilweisen Verdampfen des wenigstens einen Mediums ausgebildet ist, mit wenigstens einer Durchströmeinrichtung zum Hindurchleiten des zu verdampfenden Mediums und mit wenigstens einer Erhitzungseinrichtung zum Bereitstellen von Wärmeenergie zum zumindest teilweisen Verdampfen des die Durchströmeinrichtung durchströmenden Mediums, wobei die Durchströmeinrichtung mit der Erhitzungseinrichtung thermisch gekoppelt ist und wobei wenigstens eine, der wenigstens einen ersten Reaktionsstufe in Strömungsrichtung des Mediums nachfolgenden zweite Reaktionsstufe als Überhitzer zum Überhitzen des verdampften Mediums oder zum vollständigen Verdampfen und Überhitzen des teilweise verdampften Mediums ausgebildet ist, mit wenigstens einer Durchströmeinrichtung zum Hindurchleiten des aus dem Verdampfer austretenden Mediums und mit wenigstens einer Überhitzungseinrichtung zum Bereitstellen von Wärmeenergie zum Überhitzen des die Durchströmeinrichtung durchströmenden Mediums auf eine bestimmte Temperatur oder zum restlosen Verdampfen des Mediums und zum Überhitzen des Mediums auf eine bestimmte Temperatur, wobei die Durchströmeinrichtung mit der Überhitzungseinrichtung thermisch gekoppelt ist, wobei der wenigstens eine Verdampfer und der wenigstens eine Überhitzer als Schichtverbund aus Einzelschichten gebildet ist, wobei die Durchströmeinrichtung des Verdampfers sowie die Durchströmeinrichtung des Überhitzers wenigstens eine Schicht mit Kanalstruktur mit wenigstens einem Kanal aufweist und wobei zumindest eine Schicht der Durchströmeinrichtung des Verdampfers mit wenigstens einer schichtförmigen Erhitzungseinrichtung und zumindest eine Schicht der Durchströmeinrichtung des Überhitzers mit wenigstens einer schichtförmigen Überhitzungseinrichtung verbunden ist. Die Vorrichtung ist erfindungsgemäß dadurch gekennzeichnet, daß der Verdampfer eine Mischeinrichtung zum Hinzumischen wenigstens eines weiteren Mediums zum zu verdampfenden Medium aufweist, wobei die Mischeinrichtung schichtförmig ausgebildet ist, wobei die Mischeinrichtung wenigstens eine Schicht mit wenigstens einem Kanal aufweist, und wobei der wenigstens eine Kanal der Mischeinrichtung in Strömungsrichtung des Mediums durch ein Barriereelement begrenzt ist und der wenigstens eine Kanal der Mischeinrichtung mit dem Eintrittsbereich des wenigstens einen Kanals der Durchströmeinrichtung des Verdampfers verbunden ist.

Die erfindungsgemäße Vorrichtung ist zunächst sehr leistungsfähig. Weiterhin benötigt die Vorrichtung nur einen geringen Platzbedarf, so daß sie sehr kompakt ausgebildet werden kann. Die Vorrichtung kann daher vorteilhaft überall dort eingesetzt werden, wo nur ein geringes Platzangebot zur Verfügung steht.

Grundsätzlich ist die Erfindung nicht auf eine bestimmte Anzahl von Verdampfern und/oder Überhitzern beschränkt. Im einfachsten Fall kann ein einzelner Verdampfer vorgesehen sein, dem in Strömungsrichtung des zu verdampfenden Mediums ein einzelner Überhitzer nachgeschaltet ist. Je nach Anwendungsbereich und Leistungsanforderungen an die Vorrichtung können jedoch auch mehrere Verdampfer und Überhitzer vorgesehen sein. Dabei können die Verdampfer und/oder Überhitzer jeweils in Reihe nacheinander oder aber auch parallel zueinander verschaltet sein. Natürlich sind auch beliebige Kombinationen aus diesen beispielhaft beschriebenen Verschaltungsanordnungen möglich.

Ein Grundgedanke der vorliegenden Erfindung besteht zunächst darin, daß der wenigstens eine Verdampfer und der wenigstens eine Überhitzer als Schichtverbund aus Einzelschichten gebildet ist. Das hat eine Reihe von Vorteilen. So ist es auf einfache und damit kostengünstige Weise möglich, die einzelnen Schichten des Verdampfers beziehungsweise Überhitzers zunächst separat herzustellen und anschließend zu dem jeweiligen Reaktorelement zusammenzufügen. Weiterhin kann auch die Anzahl der Einzelschichten variiert werden, so daß die einzelnen Reaktorelemente an die jeweils herrschenden Anforderungen angepaßt werden können. Durch die schichtförmige Ausgestaltung der einzelnen Komponenten wird weiterhin erreicht, daß ein guter Wärmeübergang zwischen den einzelnen Komponenten realisiert ist.

Erfindungsgemäß weisen die Durchströmeinrichtungen des Verdampfers und des Überhitzers wenigstens eine Schicht mit Kanalstruktur auf. Dabei ist in jeder Durchströmeinrichtung wenigstens ein Kanal vorgesehen. Jedoch ist die Erfindung nicht auf eine bestimmte Anzahl von Kanälen beschränkt. Im einfachsten Fall weist die Durchströmeinrichtung einen einzigen Kanal auf. Vorteilhaft können jedoch auch mehrere Kanäle vorgesehen sein, die dann vorzugsweise parallel zueinander angeordnet sind. Je mehr Kanäle vorgesehen sind, desto größere Mengen an Medium können gleichzeitig durch die Durchströmeinrichtung hindurchgeleitet werden. Dadurch kann zum einen der Durchsatz erheblich verbessert werden. Weiterhin kann der Bauraumbedarf des Verdampfers, beziehungsweise Überhitzers reduziert werden, da die einzelnen Kanäle im Vergleich zu einem einzigen Kanal wesentlich kürzer ausgebildet sein können.

Weiterhin ist die Erfindung nicht auf eine bestimmte Ausgestaltung und/oder Anordnung der Kanäle in den Durchströmeinrichtungen beschränkt. Vielmehr kann die Kanalstruktur jede beliebige Dimensionierung haben. Insbesondere können die einzelnen Kanäle jede beliebige Größe und Querschnittsform aufweisen. Auf diese Weise läßt sich die erfindungsgemäße Vorrichtung auf besonders einfache und effektive Weise an jede mögliche Anwendungsform anpassen.

Jeder Kanal weist vorzugsweise einen Eintrittsbereich, einen Reaktionsbereich sowie einen Austrittsbereich auf. Als Eintrittsbereich wird dabei derjenige Bereich verstanden, in dem das Medium in den Kanal eintritt. Der Eintrittsbereich kann sich dabei auch bis zu einem Punkt erstrecken, an dem eine entsprechende Reaktion beginnt. In analoger Weise verhält es sich mit dem Austrittsbereich. Als Reaktionsbereich wird derjenige Bereich des Kanals verstanden, in dem bezüglich des die Kanäle durchströmenden Mediums der Hauptteil der Reaktion stattfindet. Dabei sind die Grenzen zwischen den einzelnen Bereichen nicht fest gezogen, sondern fließend, so daß Reaktionen durchaus auch bereits im Eintrittsbereich beziehungsweise noch im Austrittsbereich auftreten können. Die Unterteilung der Kanäle in die genannten Bereiche dient lediglich der groben Einteilung der Kanäle.

Weiterhin ist erfindungsgemäß vorgesehen, daß zumindest eine Schicht der Durchströmeinrichtung des Verdampfers mit wenigstens einer schichtförmigen Erhitzungseinrichtung verbunden ist. Auf diese Weise wird eine besonders einfache und leistungsfähige Verdampfung des die Durchströmeinrichtung durchströmenden Mediums erreicht. Dabei ist die Erfindung nicht auf eine bestimmte Anzahl von Durchströmeinrichtungs-Schichten und Erhitzungseinrichtungs-Schichten beschränkt. Im einfachsten Fall weist der Verdampfer eine Durchströmeinrichtungs-Schicht sowie eine Erhitzungseinrichtungs-Schicht auf, die thermisch miteinander gekoppelt sind, so daß ein optimaler Wärmeaustausch zwischen der Erhitzungseinrichtung und dem die Durchströmeinrichtung durchströmenden Mediums erfolgen kann. Es ist jedoch auch denkbar, daß jeweils mehr als eine Durchströmeinrichtungs-Schicht übereinander gestapelt sind und daß nicht nach jeder Durchströmeinrichtungs-Schicht eine Erhitzungseinrichtungs-Schicht folgt. In analoger Weise kann auch der Überhitzer aufgebaut sein.

Die erfindungsgemäße Vorrichtung zum Verdampfen und Überhitzen wenigstens eines Mediums weist eine Reihe von Vorteilen auf. Dabei ist zunächst darauf hinzuweisen, daß mit der Vorrichtung sowohl einzelne Medien, als auch Mediengemische aus zwei oder mehr Medien verdampft beziehungsweise überhitzt werden können.

Mittels der erfindungsgemäßen Vorrichtung wird es möglich, daß das verdampfte Medium oder Mediumgemisch beim Austritt aus dem Überhitzer eine gleichmäßige, definierte Temperatur aufweist. Ein weiterer Vorteil besteht darin, daß der Verdampfer und der Überhitzer als eigenständige Reaktionsstufen ausgebildet sind. Das bedeutet nicht unbedingt, daß Verdampfer und Überhitzer als eigenständige voneinander getrennte Bauteile vorliegen müssen. Vielmehr ist es ebenso denkbar, daß der Verdampfer und der Überhitzer in einem einzigen Bauteil integriert sind. Wenn der Verdampfer und der Überhitzer als voneinander unabhängige Reaktionsstufen ausgebildet sind, bedeutet dies, daß die einzelnen Reaktionsstufen thermisch voneinander isoliert werden können. Dadurch wird eine gute Regelbarkeit der einzelnen Komponenten sowie eine hohe Dynamik der gesamten Vorrichtung gewährleistet.

Vorteilhaft kann die als Verdampfer ausgebildete erste Reaktionsstufe dazu dienen, das zunächst flüssige Medium bis zu einem Temperaturbereich zu erhitzen, bei welchem das Medium verdampfen kann. In der als Überhitzer ausgebildeten zweiten Reaktionsstufe, die dem Verdampfer in Strömungsrichtung des zu verdampfenden Mediums nachgeschaltet ist, kann dann mittels eines vorzugsweise fein regulierbaren Heizsystems das Medium weiter erhitzt werden. Vorzugsweise wird es dabei auf eine exakt einhaltbare Temperatur eingestellt.

Die Erfindung ist nicht auf eine bestimmte Ausgestaltung oder Anordnung der Erhitzungseinrichtung und/oder der Überhitzungseinrichtung beschränkt. Beispielsweise ist es denkbar, daß die in der Erhitzungseinrichtung, beziehungsweise Überhitzungseinrichtung, bereitgestellte Wärmeenergie elektrisch erzeugt wird. In diesem Fall kann die Bereitstellung von Wärmeenergie mittels geeigneter Heizelemente, Heizpatronen und dergleichen erfolgen. Diese Heizelemente sind dann vorzugsweise in der schichtförmigen Erhitzungseinrichtung, beziehungsweise Überhitzungseinrichtung, angeordnet. In anderer Ausgestaltung ist es denkbar, daß die Erhitzungseinrichtung und/oder die Überhitzungseinrichtung eine Kanalstruktur mit wenigstens einem Kanal aufweist und daß durch die Kanäle ein entsprechendes Heizmedium hindurchströmt. Selbstverständlich ist die Erfindung nicht auf die beiden vorgenannten, exemplarischen Beispiele beschränkt. Einige nicht ausschließliche Beispiele für geeignete Ausgestaltungsformen für die Erhitzungseinrichtung und die Überhitzungseinrichtung werden im weiteren Verlauf der Beschreibung näher erläutert.

Die erfindungsgemäße Vorrichtung kann über einen Eingangsverteilerbereich verfügen, dem aus einer Zuleitung flüssiges Medium zugeführt wird. Über den Eingangsverteilerbereich wird dann das Medium auf den Eingangsbereich des wenigstens einen Kanals der wenigstens einen Durchströmeinrichtung des wenigstens einen Verdampfers verteilt. Nach Durchlaufen des Reaktionsbereichs des Kanals wird das verdampfte Medium über den Austrittsbereich des Kanals in einen Medienauslaß einmünden. Von dort kann das Medium - je nach Ausgestaltung der Vorrichtung - in einen weiteren Verdampfer oder in einen Überhitzer eintreten. Der Eingangsbereich, beziehungsweise die Eintrittsöffnung, oder der Eingang des wenigstens einen Kanals der Durchströmöffnung des Überhitzers ist ebenso mit dem vorbeschriebenen Verdampferauslaß verbunden, so daß durch den anliegenden Überdruck das bereits möglichst vollständig verdampfte Medium aus dem Verdampfer in den Überhitzer, oder aber, bei mehreren nachfolgenden Verdampfern, in den nachfolgenden Verdampfer und von dort in weitere Reaktionsstufen hineingedrückt wird, wo es möglichst vollständig verdampft und mittels der Überhitzungseinrichtung auf die vorgegebene Temperatur eingestellt wird.

Vorteilhaft können zumindest einzelne Kanäle einzelner Durchströmeinrichtungen unterschiedliche Kanalstrukturen im Eintrittsbereich und/oder Austrittsbereich und/oder Reaktionsbereich aufweisen. Beispielsweise kann vorgesehen sein, daß die Kanäle im Eintrittsbereich beziehungsweise Austrittsbereich größer ausgebildet sind als im Reaktionsbereich. Ebenso ist es denkbar, daß die Kanalanzahl im Eintrittsbereich beziehungsweise Austrittsbereich geringer als im Reaktionsbereich ist. Insbesondere kann vorgesehen sein, daß im Reaktionsbereich eine möglichst große Anzahl von möglichst kleinen Kanälen vorgesehen ist, wodurch eine große Reaktionsoberfläche geschaffen wird. Da die Eintrittsbereiche und Austrittsbereiche im wesentlichen zum Hinführen des Mediums zum Reaktionsbereich, beziehungsweise zum Abführen des Mediums aus dem Reaktionsbereich, dienen, kann es vorteilhaft sein, daß die Anzahl der Kanäle in diesen Bereichen geringer ist, bei gleichzeitig größeren Kanalquerschnitten. Auf diese Weise wird gewährleistet, daß das Medium auf einfache Weise problemlos in die Reaktionsbereiche der Kanäle eintreten beziehungsweise aus diesen austreten kann.

Vorteilhaft kann der Verdampfer und/oder der Überhitzer in Mikrostrukturtechnik ausgebildet sein. Dabei ist insbesondere vorgesehen, daß der wenigstens eine Kanal der Durchströmeinrichtung des Verdampfers und/oder Überhitzers als Mikrokanal ausgebildet ist. Durch die Ausgestaltung in Mikrotechnik wird erreicht, daß auf kleinstem Raum eine große Anzahl von Mikrokanälen realisiert werden kann, deren Breite und Höhe im Submillimeterbereich liegen. Auf diese Weise verfügt der Verdampfer und/oder der Überhitzer über hohe spezifische Oberflächen, das heißt über ein hohes Verhältnis von Kanaloberfläche zu Kanalvolumen. Weiterhin weisen entsprechend ausgebildete Verdampfer und/oder Überhitzer, die in diesem Fall als Mikroreaktoren bezeichnet werden - wie dies der Name bereits aussagt - bei nur geringstem Platzbedarf eine sehr hohe Leistungsfähigkeit auf.

In weiterer Ausgestaltung können zumindest einzelne Schichten des Verdampfers und/oder Überhitzers als Folien ausgebildet sein. Jedoch ist die Erfindung nicht auf bestimmte Ausgestaltungsformen beziehungsweise Herstellungsarten für die Schichten beschränkt, so daß hier unterschiedlichste Techniken zum Einsatz kommen können. So ist es beispielsweise möglich, den wenigstens einen Kanal für die Durchströmeinrichtung des Verdampfers und/oder Überhitzers je aus einem Block herauszufräsen, herauszubohren oder mittels Lasertechnologie herauszubrennen. Es ist allerdings auch möglich, daß die einzelnen Schichten, beziehungsweise Kanäle, mittels Verfahrenstechniken hergestellt werden, wie sie bei kleinen Strukturen Anwendung finden können. Dies kann beispielsweise mittels Ausätzen der Kanäle aus den Schichten, durch Prägen oder dergleichen vorgenommen werden.

Vorzugsweise kann die schichtförmige Erhitzungseinrichtung des Verdampfers wenigstens einen Kanal zum Hindurchleiten eines Heizmediums aufweisen. In diesem Fall ist die Erhitzungseinrichtung in ähnlicher Weise wie die Durchströmeinrichtung des Verdampfers aufgebaut, so daß diesbezüglich auch auf die vorstehenden Ausführungen Bezug genommen und hiermit verwiesen wird. Wenn die Erhitzungseinrichtung eine Kanalstruktur aufweist, kann die Verdampfung des die Durchströmeinrichtung durchströmenden Mediums in folgender Weise erfolgen.

Da die schichtförmige Erhitzungseinrichtung und die schichtförmige Durchströmeinrichtung thermisch miteinander gekoppelt sind, was zu einem guten Wärmeaustausch zwischen den einzelnen Schichten führt, wird die dem Heizmedium, welches die Kanäle der Erhitzungseinrichtung durchströmt, inne wohnende Wärmeenergie auf das zu verdampfende Medium übertragen. Dabei kann es vorteilhaft sein, wenn die Kanäle der Durchströmeinrichtung und die Kanäle der Erhitzungseinrichtung eine unterschiedliche Kanalstruktur aufweisen. So ist es beispielsweise denkbar, daß die Kanalquerschnitte der Kanäle der Erhitzungseinrichtung auf Grund eines größeren Massenstroms größer sind als die Kanalquerschnitte der Kanäle in der Durchströmeinrichtung.

Ebenso ist es denkbar, daß die Erhitzungseinrichtung nach dem Prinzip eines katalytischen Brenners funktioniert. In diesem Fall sind die Kanäle der Erhitzungseinrichtung mit einem Katalysatormaterial beschichtet. Wenn die Kanäle nun mit einem Medium durchströmt werden, welches mit dem Katalysatormaterial reagiert, entsteht hierdurch eine exotherme Reaktion, was bedeutet, daß Wärme frei wird. Diese Wärme kann dann zum Erhitzen des zu verdampfenden Mediums herangezogen werden. Eine solche Ausgestaltung der Erhitzungseinrichtung ist insbesondere dann von Vorteil, wenn der Verdampfer im Niedertemperaturbereich bis etwa 400 °C arbeitet. Natürlich sind auch Kombinationen aus beiden Prinzipien möglich.

Vorteilhaft können die Kanäle der Durchströmeinrichtung und der Erhitzungseinrichtung parallel zueinander ausgerichtet sein. Selbstverständlich ist es auch denkbar, daß die Kanäle im Kreuzstromprinzip zueinander ausgerichtet sind. Wenn die Kanäle parallel zueinander ausgerichtet sind, kann der Verdampfer entweder im Gleichstromprinzip, oder aber im Gegenstromprinzip betrieben werden. Besonders vorteilhaft werden die Kanäle der Durchströmeinrichtung und der Erhitzungseinrichtung jedoch im Gegenstromprinzip durchströmt, beziehungsweise sind im Gegenstromprinzip durchströmbar. Dies ermöglicht eine besonders kontinuierliche, genau steuerbare Erwärmung beziehungsweise Verdampfung des Mediums.

Grundsätzlich ist es ausreichend, wenn der Verdampfer wenigstens eine Durchströmeinrichtung für das zu verdampfende Medium aufweist. Es ist jedoch auch denkbar, daß noch weitere, zusätzliche Einrichtungen in dem Verdampfer vorgesehen sind. Erfindungsgemäß weist der Verdampfer weiterhin eine Mischeinrichtung zum Hinzumischen wenigstens eines weiteren Mediums zum zu verdampfenden Medium auf. Auf diese Weise kann ein Mediengemisch hergestellt werden, das anschließend verdampft wird.

Wenn die Vorrichtung beispielsweise im Zusammenhang mit der in der Beschreibungseinleitung genannten Weise verwendet wird, nämlich daß sie Bestandteil einer Vorrichtung zum Erzeugen/Aufbereiten eines Brennstoffs für eine Brennstoffzelle ist, kann es vorteilhaft sein, daß zunächst ein Gemisch aus einem Kohlenwasserstoff, beispielsweise Benzin, und Wasser hergestellt wird, das anschließend verdampft und überhitzt wird. Über die Mischeinrichtung kann dann das entsprechende Gemisch nach dem jeweils erforderlichen Verhältnis eingestellt werden.

Dazu kann die Mischeinrichtung beispielsweise als eine Art weitere Durchströmeinrichtung ausgebildet sein. Einige nicht ausschließliche Ausgestaltungsformen für eine geeignete Mischeinrichtung werden nachfolgend näher erläutert.

Beispielsweise kann die Mischeinrichtung im Eintrittsbereich des wenigstens einen Kanals der Durchströmeinrichtung des Verdampfers vorgesehen sein. Auf diese Weise wird sichergestellt, daß die Herstellung des entsprechenden Gemischs abgeschlossen ist, noch bevor das Gemisch den eigentlichen Reaktionsbereich der Kanäle der Durchströmeinrichtung des Verdampfers erreicht.

Erfindungsgemäß ist die Mischeinrichtung schichtförmig ausgebildet, wobei die Mischeinrichtung wenigstens eine Schicht mit wenigstens einem Kanal aufweist. Dabei kann der wenigstens eine Kanal der Mischeinrichtung in einer Mischzone mit dem wenigstens einen Kanal der Durchströmeinrichtung des Verdampfers verbunden sein. Wenn die Mischeinrichtung schichtförmig ausgebildet ist, bildet sie vorteilhaft einen Bestandteil des aus Einzelschichten gebildeten Schichtverbunds des Verdampfers. Vorteilhaft entspricht die Anzahl der schichtförmigen Mischeinrichtungen der Anzahl der schichtförmigen Durchströmeinrichtungen. Es ist jedoch auch denkbar, daß jeweils eine schichtförmige Mischeinrichtung sandwichartig zwischen zwei schichtförmigen Durchströmeinrichtungen angeordnet ist. In diesem Fall kann die Mischeinrichtung jeweils zwei Durchströmeinrichtungen bedienen.

Erfindungsgemäß ist der wenigstens eine Kanal der Mischeinrichtung in Strömungsrichtung des zu verdampfenden Mediums durch ein Barriereelement begrenzt, wobei der wenigstens eine Kanal der Mischeinrichtung mit dem Eintrittsbereich des wenigstens einen Kanals der Durchströmeinrichtung des Verdampfers verbunden ist. Durch das Barriereelement wird sichergestellt, daß das über die Mischeinrichtung eintretende Medium auf jeden Fall noch im Eintrittsbereich des Kanals der Durchströmeinrichtung in diesen eintritt und zu einer Bildung des Mediengemischs führt. Durch den Einsatz eines Barriereelements wird weiterhin ein genau definierbarer Ort geschaffen, bis zu dem die Durchmischung abgeschlossen ist.

Vorteilhaft kann die Mischeinrichtung in Strömungsrichtung hinter dem Barriereelement wenigstens einen Kanal aufweisen, der mit dem wenigstens einen Kanal der Durchströmeinrichtung des Verdampfers verbunden ist. Auf diese Weise kann die Mischeinrichtung als eine Art weitere Durchströmeinrichtung fungieren. Dem zu verdampfenden Gemisch stehen nach der internen Mischung erneut zwei Durchströmpassagen zur Verfügung, was insbesondere eine positive Wirkung auf den Druckverlust hat. Wenn man in einem solchen Fall den wenigstens einen Kanal der Mischeinrichtung in seiner Gesamtheit betrachtet, kann dieser gemäß der weiter oben verwendeten Diktion somit einen Eintrittsbereich aufweisen, der in Strömungsrichtung des Mediums durch das Barriereelement begrenzt ist. Der sich dem Barriereelement anschließende Kanalbereich könnte dann als Reaktionsbereich angesehen werden.

In einem solchen Fall kann der wenigstens eine Kanal der Mischeinrichtung und der wenigstens eine Kanal der Durchströmeinrichtung des Verdampfers vorteilhaft parallel zueinander ausgerichtet sein.

In weiterer Ausgestaltung kann die Erhitzungseinrichtung zum Erhitzen des Mediums im Reaktionsbereich der Kanäle der Durchströmeinrichtung des Verdampfers ausgebildet sein. Bei dem Verdampfer kann vorgesehen sein, daß die eigentliche Verdampfung des Mediums im Reaktionsbereich der Kanäle stattfindet. Das bedeutet, daß eine Erhitzung beziehungsweise Verdampfung des Mediums im Eintrittsbereich der Kanäle nicht oder nur in untergeordnetem Maße stattfindet. Das kann eine Reihe von Vorteilen haben. Wenn beispielsweise ein Wasser-Benzin-Gemisch verdampft werden soll, könnte eine einsetzende Verdampfung der beiden Medien noch vor dem Mischbereich dazu führen, daß das Benzin im Eintrittsbereich der Kanäle verkokt. Das hat den Nachteil, daß sich die Kanäle, die ja bei Ausgestaltung in Form von Mikrokanälen nur geringste Kanalquerschnitte aufweisen, zusetzen. Weiterhin kann durch die entsprechende Ausgestaltung des Verdampfers die Gefahr des pulsierenden Siedens verringert werden.

Vorzugsweise kann das die Erhitzungseinrichtung durchströmende Heizmedium über einen Auslaß in Bezug auf die Strömungsrichtung des Heizmediums zwischen dem Ende des Reaktionsbereichs der Erhitzungseinrichtung und der Mischzone der Durchströmeinrichtung abgeführt werden.

Wenn die Erhitzungseinrichtung und die Durchströmeinrichtung eine wie vorstehend beschriebene Kanalstruktur aufweisen und im Gegenstromprinzip betrieben werden, kann die Erhitzungseinrichtung im Vergleich zur Durchströmeinrichtung vorteilhaft derart angeordnet werden, daß das die Erhitzungseinrichtung durchströmende Heizmedium noch vor dem Mischbereich abgeleitet wird. Damit kann sich das Benzin-Wasser-Gemisch oder aber die Einzelkomponenten des Gemischs zwar über Wärmeleitung im Bauteil vorerwärmen, dennoch werden die vorstehend beschriebenen Gefahren verringert. Der Grund hierfür liegt insbesondere darin, daß die flüssige Phase des Mediums im Eintrittsbereich keinen zu hohen Temperaturen ausgesetzt ist.

In weiterer Ausgestaltung kann die Erhitzungseinrichtung des Verdampfers mit einem Heizmedium-Auslaß aus dem Überhitzer verbunden sein. Auf diese Weise kann das aus dem Überhitzer austretende Abgas - wie im weiteren Verlauf der Beschreibung noch näher erläutert wird - als Heizgas für den Verdampfer verwendet werden. Insbesondere kann auf diese Weise eine weitere Verbrennung des im Überhitzer nicht vollständig umgesetzten Brenngases erfolgen, was neben ökonomischen auch ökologische Vorteile hat.

Um die Temperaturen im Verdampfer überwachen zu können, weist der Verdampfer vorteilhaft wenigstens ein Thermoelement auf, wobei das Thermoelement vorzugsweise in einer Thermoelement-Schicht eingebracht wird. In einem solchen Fall kann die Thermoelement-Schicht beispielsweise ein Bestandteil des Schichtverbunds aus Einzelschichten sein. Ebenso ist es denkbar, daß jeweils eine Thermoelement-Schicht zwischen zwei benachbart angeordneten Schichtverbunden angeordnet ist. Die Anzahl der Thermoelemente pro Thermoelement-Schicht, beziehungsweise die Anzahl der Thermoelement-Schichten, ergibt sich je nach der geforderten Genauigkeit für die Messung der Temperaturen.

Auch wenn die Erfindung nicht auf eine bestimmte Anordnung und Anzahl der Einzelschichten des Verdampfers beschränkt ist, wird nachfolgend ein nicht ausschließliches Beispiel für eine vorteilhafte Ausgestaltung des Verdampfers beschrieben. Zunächst kann vorgesehen sein, daß die beiden jeweils außen liegenden Schichten des Verdampfers als Deckplatten ausgebildet sind. Diese dienen insbesondere zum Schutz der empfindlichen Verdampfer-Schichten. Der eigentliche Verdampfer kann vorteilhaft zunächst aus einem Grundstapel von mehreren Einzelschichten gebildet sein, wobei die Einzelschichten in ihrer Ausgestaltung in Mikrostrukturtechnik eine Dicke im Submillimeterbereich aufweisen. Dieser Grundstapel kann wiederum mehrmals untereinander angeordnet werden, wobei in regelmäßigen Abständen eine Thermoelement-Schicht eingebracht ist. In vorteilhafter Weise enthält der Grundstapel wenigstens eine Erhitzungseinrichtungs-Schicht, wenigstens eine Mischeinrichtungs-Schicht und wenigstens eine Durchströmeinrichtungs-Schicht.

In weiterer Ausgestaltung kann die schichtförmige Überhitzungseinrichtung des Überhitzers wenigstens einen Kanal zum Hindurchleiten eines Überhitzungsmediums aufweisen.

Dabei kann die Überhitzungseinrichtung vorteilhaft als katalytischer Brenner ausgebildet sein. Wenn die Überhitzungseinrichtung als katalytischer Brenner betreiben wird, ist der wenigstens eine Kanal üblicherweise mit einem Katalysatormaterial beschichtet. Wenn der Kanal nun von einem Medium, welches mit dem Katalysatormaterial reagiert, durchströmt wird, findet in dem Kanal eine Reaktion statt, die in der Regel exotherm ist, so daß die in dem Kanal entstandene Wärme für andere Prozesse, beziehungsweise Verbraucher, zur Verfügung gestellt werden kann.

Vorteilhaft kann die Überhitzungseinrichtung aus wenigstens zwei Einzelschichten gebildet sein, wobei jede Einzelschicht wenigstens einen Kanal aufweist und wobei die Kanäle der Einzelschichten in einer Mischzone miteinander verbunden sind. Auf diese Weise kann die von der Überhitzungseinrichtung bereitgestellte Wärme auf einfache und genaue Weise dosiert werden. Dies soll an Hand eines nicht ausschließlichen Beispiels verdeutlicht werden.

Wenn die Überhitzungseinrichtung als katalytischer Brenner ausgebildet ist, kann über eine der Einzelschichten beispielsweise Wasserstoff und über die andere Einzelschicht beispielsweise Verbrennungsluft zugeführt werden. Diese beiden Medien werden in der Mischzone miteinander vermischt. Auf diese Weise läßt sich das Verhältnis zwischen Wasserstoff und Verbrennungsluft genau einstellen. Das auf diese Weise entstehende Mediengemisch wird anschließend durch den wenigstens einen Kanal der Überhitzungseinrichtung geleitet. Wie weiter oben bereits dargelegt wurde, ist dieser Kanal vorteilhaft mit einem Katalysatormaterial beschichtet, welches mit dem WasserstoffNerbrennungsluftgemisch reagiert.

Vorteilhaft kann die Ausgestaltung der jeweiligen Einzelschichten und/oder der Mischzone und/oder der Mischungsvorgang der einzelnen Medien zu einem Mediengemisch in einer Art und Weise erfolgen, wie sie im Zusammenhang mit der Mischeinrichtung des Verdampfers weiter oben bereits beschrieben wurde. Aus diesem Grund wird bezüglich des Grundaufbaus sowie der grundsätzlichen Funktionsweise auch auf diese vorstehenden Ausführungen im Zusammenhang mit dem Verdampfer vollinhaltlich Bezug genommen und hiermit verwiesen.

Beispielsweise kann der wenigstens eine Kanal von einer der Einzelschichten durch ein Barriereelement begrenzt sein. Weiterhin kann dieser Kanal mit dem Eintrittsbereich des wenigstens einen Kanals der anderen Einzelschicht verbunden sein. Bei einer Vorvermischung des Brenngases, beispielsweise von Wasserstoff, mit Luft, wird eine optimale Wärmeabfuhr möglich.

In weiterer Ausgestaltung kann die Einzelschicht mit dem Barriereelement in Strömungsrichtung des Überhitzungsmediums hinter dem Barriereelement wenigstens einen Kanal aufweisen, der mit dem wenigstens einen Kanal der anderen Einzelschicht verbunden ist. Auch in diesem Fall stehen dem Gemisch nach der getrennten Zufuhr und nach der internen Mischung wieder zwei Strömungspassagen zur Verfügung, was eine positive Wirkung auf den Druckverlust hat.

Vorteilhaft kann der Überhitzer wenigstens eine schichtförmige Durchströmeinrichtung für ein weiteres Medium aufweisen, wobei diese Durchströmeinrichtung ebenfalls eine Kanalstruktur mit wenigstens einem Kanal aufweisen kann.

Auf diese Weise kann nicht nur das im Verdampfer bereits verdampfte Medium auf eine vorbestimmte Temperatur erhitzt werden. Gleichzeitig kann auch noch ein weiteres Medium über den Überhitzer vorerwärmt werden. Dies soll an Hand eines nicht ausschließlichen Beispiels verdeutlicht werden. Beispielsweise kann die Vorrichtung zum Verdampfen und Überhitzen eingesetzt werden, um ein Brennstoffgemisch herzustellen, welches in einem nachfolgenden Reaktorelement, beispielsweise einem Reformer, weiter verarbeitet wird. Bei einem Reformer ist es beispielsweise erforderlich, daß diesem neben dem umzuwandelnden Brennstoffgemisch zusätzlich Luft zugeführt wird. Diese Luft muß ebenfalls vorerwärmt werden. Dazu kann die Luft durch die weitere schichtförmige Durchströmeinrichtung des Überhitzers hindurchgeleitet werden. Die von der Überhitzungseinrichtung erzeugte Wärme kann dabei ebenfalls verwendet werden, um diese Luft auf eine vorbestimmte Temperatur vorzuerwärmen.

Vorzugsweise können die Kanäle der Durchströmeinrichtung(en) des Überhitzers und der Überhitzereinrichtung parallel zueinander ausgerichtet sein. Auch hier ist es wiederum denkbar, daß die Kanäle auch in Kreuzstrombauweise ausgerichtet sind. Wenn die Kanäle parallel zueinander ausgerichtet sind, werden die Kanäle der Durchströmeinrichtung(en) und der Überhitzungseinrichtung vorteilhaft im Gegenstromprinzip durchströmt beziehungsweise sind im Gegenstromprinzip durchströmbar. In diesem Zusammenhang wird ebenfalls auf die entsprechenden Ausführungen zum Verdampfer vollinhaltlich Bezug genommen und hiermit verwiesen. Bei einer solchen Ausgestaltung erfolgt die interne Mischung von Wasserstoff und Verbrennungsluft an einer Stelle, an der schon das zu überhitzende Medium für eine optimale Wärmeabfuhr sorgt.

Vorteilhaft können die Austrittsbereiche des wenigstens einen Kanals der Durchströmeinrichtung für das zu überhitzende Medium sowie des wenigstens einen Kanals der Durchströmeinrichtung für das weitere Medium als gemeinsame Mischkammer zum Vermischen der Medien ausgebildet sein. Zurückkommend auf das oben genannte nicht ausschließliche Beispiel hat eine solche Ausgestaltung den Vorteil, daß die zunächst getrennten Prozeßgase Luft sowie das aus dem Verdampfer stammende Benzin-Wasserdampf-Gemisch vor dem Eintritt in den Reformer noch innerhalb des Überhitzers gemischt werden.

In weiterer Ausgestaltung kann die Überhitzungseinrichtung zum Überhitzen des wenigstens einen Mediums im Reaktionsbereich des wenigstens einen Kanals der Durchströmeinrichtung ausgebildet sein. Damit kann wiederum sichergestellt werden, daß im Überhitzer keine Überhitzung im Eintrittsbereich des aus dem Verdampfer stammenden verdampften Mediums, beziehungsweise Mediengemischs, oder des in den Überhitzer zusätzlich eintretenden Mediums erfolgt. Dennoch kann das in den Überhitzer zusätzlich eintretende Medium, beispielsweise Prozeßluft für den Reformer, bereits im Eintrittsbereich vorerwärmt werden, was beispielsweise mittels Wärmeleitung im Bauteil erfolgt. Auf diese Weise wird sichergestellt, daß die in den Überhitzer eintretende Reformer-Luft (Prozeßluft) bereits im Eintrittsbereich der Durchströmeinrichtung vorerwärmt wird und somit keine Kühlwirkung auf das aus dem Verdampfer stammende verdampfte Medium, beziehungsweise Mediengemisch, ausübt. Wenn es sich bei dem verdampften Medium beispielsweise um ein Wasser-Benzin-Gemisch handelt, kann auf diese Weise eine unerwünschte Kondensation von Benzinkomponenten und eine nachfolgende Verkokung mit den weiter oben bereits beschriebenen Nachteilen verhindert werden.

Vorzugsweise kann das die Überhitzungseinrichtung durchströmende Heizmedium über einen Auslaß in Bezug auf die Strömungsrichtung des Heizmediums zwischen dem Ende des Reaktionsbereichs der Überhitzungseinrichtung und dem Einlaß des wenigstens einen weiteren Mediums der Durchströmeinrichtung abgeführt werden.

Vorzugsweise kann der Überhitzer wenigstens ein Thermoelement aufweisen, wobei das Thermoelement vorzugsweise in einer Thermoelement-Schicht angeordnet ist. Auf diese Weise kann der Temperaturverlauf des den Überhitzer durchströmenden Mediums genau verfolgt werden. Dadurch ist sichergestellt, daß jedes den Überhitzer verlassende Medium die erforderliche Temperatur aufweist.

Die Erfindung ist nicht auf bestimmte Ausgestaltungsvarianten für den Überhitzer beschränkt. Nachfolgend werden jedoch einige nicht ausschließliche Beispiele beschrieben. So ist es etwa denkbar, daß der Überhitzer aus vier verschiedenen Schichttypen besteht, wobei jeweils zwei Schichttypen eine Überhitzungseinrichtung bilden und somit zusammengehören, da sie untereinander verbunden sind. Wenn diese Schichten Kanäle aufweisen und die Überhitzungseinrichtung als katalytischer Brenner ausgestaltet ist, sind die Kanäle dieser beiden Schichten mit einem entsprechenden Katalysatormaterial beschichtet. Als weitere Schicht kann eine Durchströmeinrichtung für das im Verdampfer bereits verdampfte Medium, beziehungsweise Mediengemisch, sowie eine Durchströmeinrichtung für ein weiteres Medium vorgesehen sein. Selbstverständlich können auch noch weitere Durchströmeinrichtungen für weitere Medien vorgesehen sein.

Wie weiter oben bereits erläutert wurde, besteht auch der Überhitzer vorteilhaft aus einem Schichtverbund aus Einzelschichten. Dabei ist die Erfindung nicht auf eine bestimmte Anzahl oder Anordnung der Einzelschichten beschränkt. Wie beim Verdampfer wird nachfolgend ein exemplarisches Beispiel für eine vorteilhafte Anordnung von Einzelschichten zu einem Überhitzer beschrieben, ohne daß die Erfindung auf das genannte Beispiel beschränkt wäre.

Der Überhitzer soll zunächst eine Überhitzungseinrichtung aufweisen, die aus zwei Einzelschichten besteht, nämlich einer Einzelschicht zur Zufuhr von einem Brenngas wie Wasserstoff und dergleichen, sowie einer Schicht zur Zufuhr von Verbrennungsluft. Weiterhin soll eine Durchströmeinrichtung für das aus dem Verdampfer überführte Medium, beziehungsweise Mediengemisch, sowie eine Durchströmeinrichtung für ein weiteres Medium, beispielsweise Luft für einen Reformer, vorgesehen sein. Aus den einzelnen Schichten kann beispielsweise ein Grundstapel gebildet werden, der beispielsweise mehrfach übereinander gestapelt wird. In regelmäßigen Abständen kann eine Thermoelement-Schicht eingebracht werden. Die Anzahl beziehungsweise Anordnung der jeweils verwendeten Schichten ergibt sich dabei nach dem Einsatzgebiet sowie den Anforderungen an den Überhitzer. Wie beim Verdampfer kann der gesamte Stapel an Einzelschichten an seinen außen jeweils mit einer geeigneten Deckplatte abgeschlossen werden.

Gemäß einem zweiten Aspekt der Erfindung wird ein Brennstoffzellensystem bereitgestellt, mit wenigstens einer Brennstoffzelle und mit einer der Brennstoffzelle vorgeschalteten Vorrichtung zum Erzeugen/Aufbereiten eines Brennstoffs. Das Brennstoffzellensystem ist erfindungsgemäß dadurch gekennzeichnet, daß die Vorrichtung zum Erzeugen/Aufbereiten des Brennstoffs wenigstens eine wie vorstehend beschriebene erfindungsgemäße Vorrichtung zum Verdampfen und Überhitzen wenigstens eines Mediums aufweist.

Durch das erfindungsgemäße Brennstoffzellensystem wird es möglich, den für den Betrieb der Brennstoffzelle erforderlichen Brennstoff besonders einfach und zuverlässig herzustellen. Vorteilhaft kann das Brennstoffzellensystem mehr als eine Brennstoffzelle aufweisen, wobei die einzelnen Brennstoffzellen zu einem Brennstoffzellen-Stack, beziehungsweise Brennstoffzellenstapel, zusammengefaßt sind. Die Größe des Stacks beziehungsweise die Anzahl der darin befindlichen Brennstoffzellen ergibt sich je nach Einsatzart und geforderter Leistung des Brennstoffzellensystems.

Die Erfindung ist nicht auf bestimmte Brennstoffzellentypen beschränkt.

Die Vorrichtung zum Erzeugen/Aufbereiten von Brennstoff besteht in der Regel aus einer Anzahl von einzelnen Komponenten, bei denen es sich beispielsweise um chemische Reaktoren wie Reformer, Shift-Reaktoren, Reaktoren für die selektive Oxidation, Verdampfer, Wärmetauscher, katalytische Brenner und dergleichen handeln kann.

Vorteilhaft weist die Vorrichtung zum Erzeugen/Aufbereiten des Brennstoffs zumindest einen Reformer auf, wobei die Vorrichtung zum Verdampfen und Überhitzen des wenigstens einen Mediums dem Reformer vorgeschaltet ist. In einem Reformer wird generell das verdampfte Medium zu einem entsprechenden Produkt reformiert. Im vorliegenden Fall dient der Reformer vorteilhaft dazu, aus einem als Ausgangsstoff dienenden Kohlenwasserstoff, beispielsweise Benzin, einen Brennstoff für die Brennstoffzelle herzustellen. Das dafür erforderliche Wasser-Benzin-Gemisch wird in der Vorrichtung zum Verdampfen und Überhitzen zunächst verdampft und anschließend auf die für den Betrieb des Reformers erforderliche Temperatur überhitzt. Weiterhin ist für einen autothermen Reformer die Zufuhr entsprechend vorgewärmter Prozeßluft erforderlich. Auch diese Prozeßluft kann über den Überhitzer vor Eintritt in den Reformer in geeigneter Weise auf die für den Prozeß erforderliche Temperatur gebracht werden.

Sollten die Gehalte an schädlichen Bestandteilen für die Brennstoffzelle, wie zum Beispiel Kohlenmonoxid, im Brennstoff nach Austritt aus dem Reformer noch zu hoch sein, können diese in einem nachgeschalteten Shift-Reaktor, beispielsweise durch eine homogene Wassergasreaktion, reduziert und anschließend in einem Reaktor zur selektiven Oxidation, beispielsweise zur selektiven Oxidation von Kohlenmonoxid zu Kohlendioxid, feingereinigt werden.

Die Erfindung wird nun an Hand von Ausführungsbeispielen unter Bezugnahme auf die beiliegende Zeichnung näher erläutert. Es zeigen:
- Figur 1: in schematischer Ansicht einen Ausschnitt aus einer Vorrichtung zum Erzeugen/Aufbereiten eines Brennstoffs für eine Brennstoffzelle mit einer erfindungsgemäßen Vorrichtung zum Verdampfen und Überhitzen wenigstens eines Mediums;
- Figuren 2 bis 5: schematische Draufsichten auf verschiedene Einzelschichten eines erfindungsgemäßen Verdampfers;
- Figur 6: eine schematische Querschnittsansicht eines Teils des erfindungsgemäßen Verdampfers; und
- Figuren 7 bis 11: schematische Draufsichten auf verschiedene Einzelschichten eines erfindungsgemäßen Überhitzers.

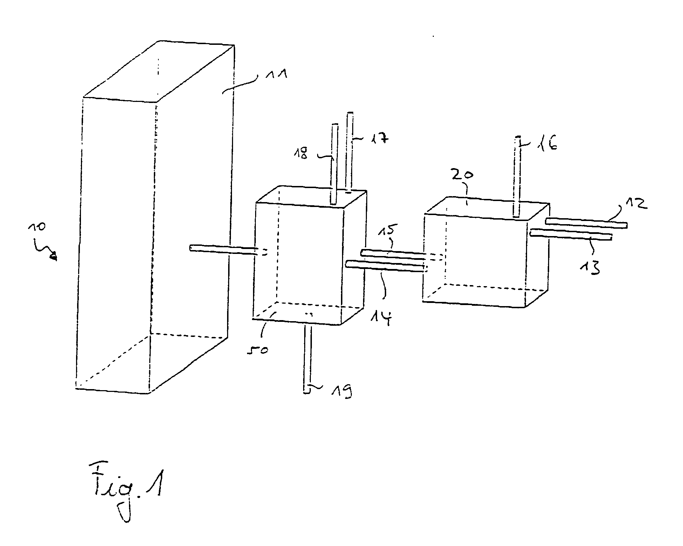

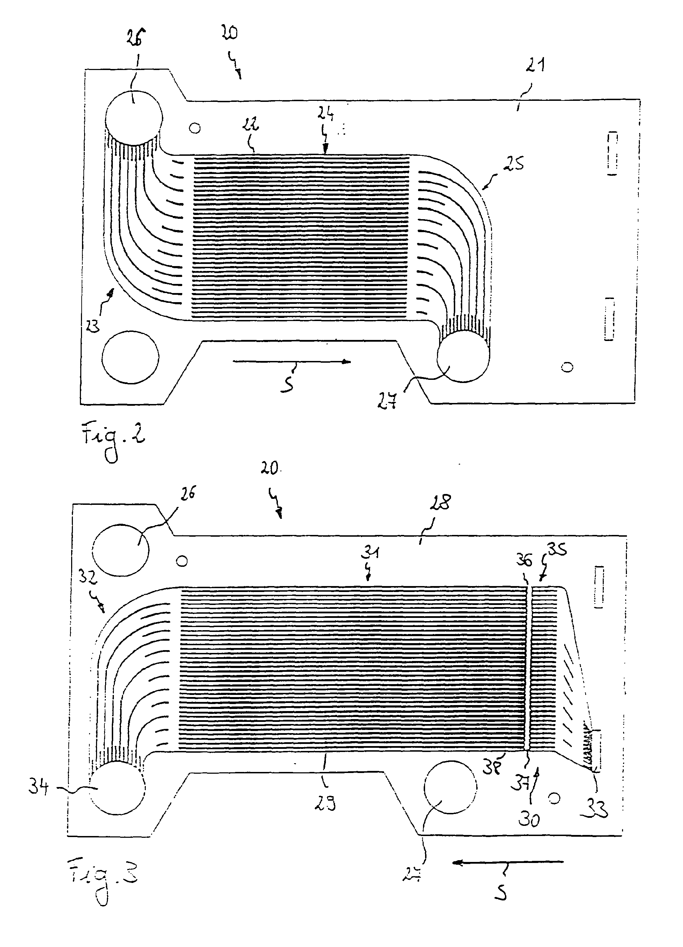

In Figur 1 ist ein Ausschnitt aus einer Vorrichtung 10 zum Erzeugen/Aufbereiten von Brennstoff für eine Brennstoffzelle (nicht gezeigt) dargestellt. Die Vorrichtung 10 hat generell die Aufgabe, einen Kohlenwasserstoff wie Benzin, Methanol oder dergleichen in einen für die Brennstoffzelle geeigneten Brennstoff, beispielsweise Wasserstoff, umzuwandeln. Dazu weist die Vorrichtung 10 eine Reihe von Reaktorelementen auf. Bei einem dieser Reaktorelemente handelt es sich um einen Reformer 11, der in Figur 1 ausschnittsweise dargestellt ist. In dem Reformer 11 wird der als Ausgangsstoff dienende Kohlenwasserstoff - hier Benzin - in ein wasserstoffreiches Gas umgewandelt. Dazu ist es jedoch erforderlich, daß der Kohlenwasserstoff zunächst in einen dampfförmigen Zustand überführt wird. Dies geschieht mit Hilfe einer Vorrichtung zum Verdampfen und Überhitzen wenigstens eines Mediums, wie sie im Zusammenhang mit den Figuren 2 bis 11 beschrieben wird.

In Figur 1 ist eine solche Vorrichtung dargestellt. Diese besteht im vorliegenden Ausführungsbeispiel aus zwei Reaktionsstufen, nämlich einem als erste Reaktionsstufe ausgebildeten Verdampfer 20 und einem als zweite Reaktionsstufe ausgebildeten Überhitzer 50. Ein zunächst flüssiges Medium wird in dem Verdampfer 20 zunächst verdampft und anschließend in dem Überhitzer 50 auf die für den Prozeßbetrieb im Reformer 11 erforderliche Temperatur eingestellt.

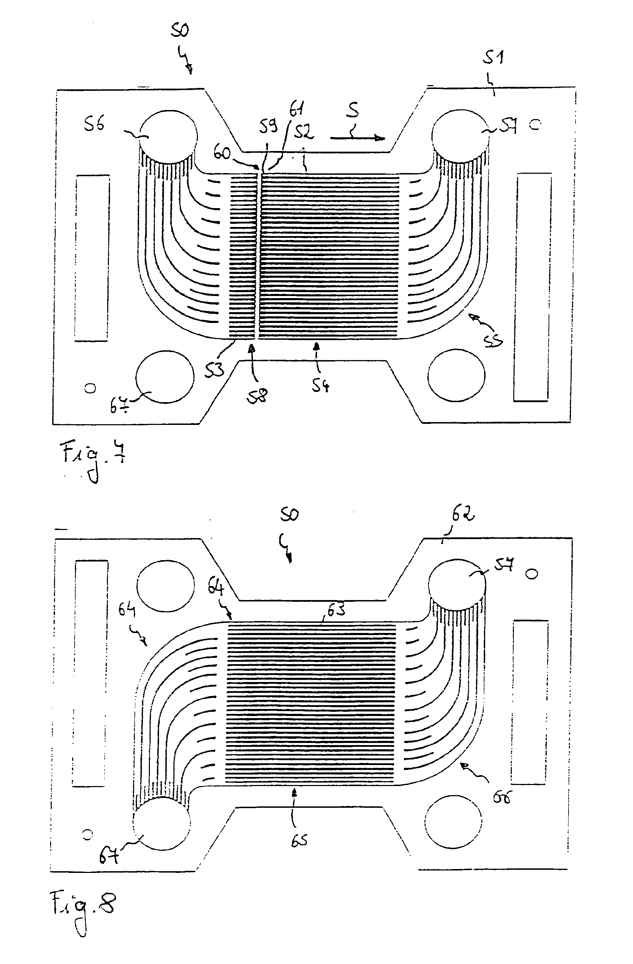

Im vorliegenden Ausführungsbeispiel ist sowohl der Verdampfer 20 als auch der Überhitzer 50 als Schichtverbund aus Einzelschichten gebildet. Der Aufbau des Verdampfers 20 wird im weiteren Verlauf an Hand der Figuren 2 bis 6 näher erläutert, während der Aufbau des Überhitzers 50 nachfolgend an Hand der Figuren 7 bis 11 näher erläutert wird.

Dem Verdampfer 20 wird über eine Zuleitung 12 Wasser und über eine Zuleitung 13 Benzin zugeführt. Das Wasser und das Benzin werden im Verdampfer 20 zunächst vermischt und anschließend aus dem flüssigen in den gasförmigen Zustand überführt, also verdampft. Die Verdampfung erfolgt über eine geeignete Erhitzungseinrichtung. Durch diese Erhitzungseinrichtung wird ein Heizmedium durchgeleitet, das seine gespeicherte Wärmeenergie an das zu verdampfende Wasser-Benzin-Gemisch überträgt, so daß dieses erhitzt und schließlich verdampft wird.

Als Heizmedium wird im vorliegenden Ausführungsbeispiel heißes Abgas aus dem Überhitzer verwendet, das noch unvollständig umgesetztes Brenngas enthalten kann und über eine Leitung 15 vom Überhitzer 50 in den Verdampfer 20 eingespeist wird. Nach Durchlaufen des Verdampfers 20 wird das - mittlerweile abgekühlte - Heizmedium über eine Ableitung 16 aus dem Verdampfer 20 abgeleitet. Das im Verdampfer 20 erzeugte dampfförmige Wasser-Benzin-Gemisch wird über eine Leitung 14 aus dem Verdampfer 20 in den Überhitzer 50 eingespeist.

Wie im weiteren Verlauf der Beschreibung an Hand der Figuren 7 bis 11 noch näher erläutert wird, weist der Überhitzer 50 eine Überhitzungseinrichtung auf, die in Form eines katalytischen Brenners ausgebildet ist. Der katalytische Brenner funktioniert auf der Basis eines Brenngasgemischs, das im vorliegenden Beispiel aus Wasserstoff und Verbrennungsluft besteht. Der hierfür erforderliche Wasserstoff wird über eine Leitung 17 in den Überhitzer 50 eingespeist, während die Verbrennungsluft über eine Leitung 18 in den Überhitzer gelangt.

Schließlich ist für den Betrieb des Reformers 11 noch Prozeßluft erforderlich, die vorteilhaft vor Eintritt in den Reformer 11 auf eine vorbestimmte Temperatur vorerwärmt wird. Die Vorerwärmung der Prozeßluft kann ebenfalls im Überhitzer 50 erfolgen, so daß dieser mit einer Zuleitung 19 für die Prozeßluft verbunden ist.

Nachfolgend wird nun der Aufbau der einzelnen Komponenten der Vorrichtung zum Verdampfen und Überhitzen wenigstens eines Mediums beschrieben.

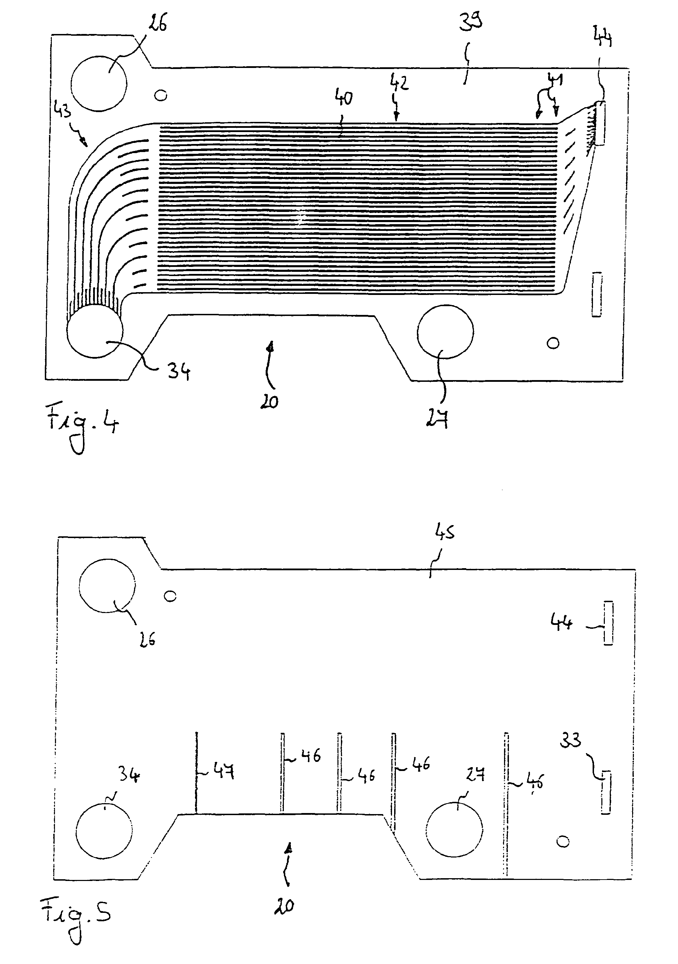

Die Figuren 2 bis 6 zeigen zunächst den grundsätzlichen Aufbau des Verdampfers 20. Wie einleitend bereits erläutert wurde, ist der Verdampfer 20 als Schichtverbund aus Einzelschichten gebildet. Eine der Schichten ist als Durchströmeinrichtung 39 ausgebildet. Diese Durchströmeinrichtung 39 ist in Figur 4 dargestellt. Wie sich aus Figur 4 ergibt, weist die Durchströmeinrichtung 39 eine Kanalstruktur auf, die wiederum aus einer Anzahl parallel zueinander verlaufender Kanäle 40 gebildet ist. Sowohl der Verdampfer 20, als auch der später näher beschriebene Überhitzer 50 sind im vorliegenden Ausführungsbeispiel in Mikrostrukturtechnik ausgebildet, was bedeutet, daß die einzelnen Kanäle als Mikrokanäle ausgebildet sind.

Die Kanäle 40 der Durchströmeinrichtung 39 bestehen aus einem Eintrittsbereich 41, einem Reaktionsbereich 42 sowie einem Austrittsbereich 43. Die Kanäle weisen im Eintrittsbereich 41 sowie im Austrittsbereich 43 eine andere Kanalstruktur als im Reaktionsbereich 42 auf. Über die Eintrittsbereiche 41 sind die Kanäle mit einem Einlaß 44 für ein zu verdampfendes Medium verbunden. Im vorliegenden Ausführungsbeispiel sind die Kanäle 40 über die Eintrittsbereiche 41 mit einem Einlaß 44 für das Medium Wasser verbunden, das über die Zuleitung 12 (Figur 1) bereitgestellt wird. Die Austrittsbereiche 43 der Kanäle 40 sind mit einem Auslaß 34 für das verdampfte Medium verbunden. Der Auslaß 34 wiederum ist mit der Leitung 14 (Figur 1) verbunden, so daß das verdampfte Medium nach Erreichen des Auslasses 34 über die Leitung 14 in den Überhitzer 50 eingeleitet werden kann.

Neben der Durchströmeinrichtung 39 weist der Verdampfer 20 eine weitere Schicht auf, die als Mischeinrichtung 28 ausgebildet ist. Diese Mischeinrichtung 28 ist in Figur 3 dargestellt. Auch die Mischeinrichtung 28 weist Kanalstruktur auf, wobei in der schichtartigen Mischeinrichtung 28 eine Anzahl von parallel zueinander ausgerichteten Kanälen 29 vorgesehen sind. Die Kanäle 29 weisen wiederum einen Reaktionsbereich 31 sowie einen Austrittsbereich 34 auf. Weiterhin sind die Kanäle 29 eintrittsseitig mit einem Einlaß 33 für ein Medium, im vorliegenden Fall Benzin, verbunden. Der Einlaß 33 wiederum ist mit der in Figur 1 dargestellten Zuleitung 13 für das Benzin verbunden.

Wie eingangs bereits erläutert wurde, ist es für den Betrieb des Reformers 11 vorteilhaft, wenn vor dem Verdampfen zunächst ein Wasser-Benzin-Gemisch hergestellt wird, das anschließend verdampft und überhitzt wird. Um eine derartige Vermischung der beiden Medien Wasser und Benzin zu erreichen, weist die Mischeinrichtung 28 zunächst Kanäle 30 auf, die mit dem Benzineinlaß 33 verbunden sind. Diese Kanäle 30 sind in Strömungsrichtung S des Mediums jedoch nach kurzer Strecke über ein Barriereelement 36 begrenzt. In Strömungsrichtung S vor dem Barriereelement 36 sind Verbindungsöffnungen 37 dargestellt, über die das Benzin aus den Kanälen 30 nach unten austreten kann. Im vorliegenden Ausführungsbeispiel sind die Schichten 39 und 28 übereinander gestapelt, so daß das Benzin über die Verbindungsöffnungen 37 in die Kanäle der darunter liegenden Durchströmeinrichtung 39 eintreten kann. Hinter der Barriere 36 sind weitere Verbindungsöffnungen 38 vorgesehen, über die Medium aus den Kanälen 40 der Durchströmeinrichtung 39 (Figur 4) in Kanäle der Mischeinrichtung 28 eintreten kann.

Die Kanäle 29 befinden sich in der Mischeinrichtung 28 in Strömungsrichtung S hinter dem Barriereelement 36.

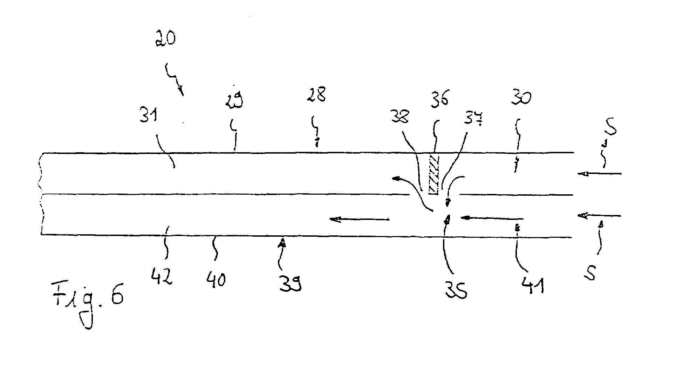

Wie die Herstellung des Benzin-Wasser-Gemischs im einzelnen erfolgt, wird aus Figur 6 ersichtlich. In Figur 6 sind in schematischer Querschnittsansicht die Durchströmeinrichtung 39 sowie die Mischeinrichtung 28 dargestellt, die übereinander angeordnet sind. Das Medium Wasser strömt in Strömungsrichtung S in den Eintrittsbereich 41 des Kanals 40 von der Durchströmeinrichtung 39 ein. Ebenso strömt das Medium Benzin in Strömungsrichtung S in die Kanäle 30 der Mischeinrichtung 28 ein. Dabei prallt das Benzin auf das Barriereelement 36 und wird über die Verbindungsöffnungen 37 nach unten in die Kanäle 40 der Durchströmeinrichtung 39 gedrückt. In diesem Bereich ergibt sich somit eine Mischzone 35, in der das Benzin und das Wasser vermischt werden. Anschließend strömt das Benzin-Wasser-Gemisch weiter durch die Kanäle 40 hin in deren Reaktionsbereiche 42. Zur Reduzierung von Druckverlusten sind hinter dem Barriereelement 36 weitere Verbindungsöffnungen 38 vorgesehen, über die die Kanäle 40 mit den Kanälen 29 verbunden sind. Auf diese Weise hat das Benzin-Wasser-Gemisch die Möglichkeit, eine weitere, durch die Kanäle 29 gebildete Strömungspassage zu nutzen. Auch in den Kanälen 29 erreicht das Benzin-Wasser-Gemisch schließlich einen Reaktionsbereich 31, wobei im vorliegenden Beispiel die Reaktionsbereiche 42 und 31 der Kanäle 40 und 29 übereinander liegen. In den Reaktionsbereichen 42 und 31 erfolgt nun die eigentliche Verdampfung des Benzin-Wasser-Gemischs.

Dazu ist wenigstens eine schichtförmige Erhitzungseinrichtung 21 vorgesehen, die in Figur 2 dargestellt ist. Wie sich aus Figur 2 ergibt, ist die Erhitzungseinrichtung 21 ebenfalls kanalartig ausgebildet und weist eine Anzahl von parallel zueinander ausgerichteten Kanälen 22 auf. Die Kanäle können wiederum in Mikrostrukturtechnik ausgebildet sein. Beispielsweise können die Kanäle 22 einen anderen Kanalquerschnitt als die Kanäle 29, 30 und 40 aufweisen. Die Kanäle 22 verfügen wiederum über einen Eintrittsbereich 23, einen Reaktionsbereich 24 sowie einen Austrittsbereich 25. Über den Eintrittsbereich 23 sind die Kanäle mit einem Einlaß 26 für ein Heizmedium verbunden. Wie sich aus Figur 1 ergibt, handelt es sich bei dem Heizgas um aus dem Überhitzer 50 austretendes Brenngas, so daß der Einlaß 26 mit der vom Überhitzer 50 abgehenden Leitung 15 verbunden ist. Das Heizmedium durchströmt die Kanäle 22 und verläßt über deren Austrittsbereiche 25 die Erhitzungseinrichtung 21 über einen Auslaß 27 für das Heizmedium, der im vorliegenden Beispiel mit der Ableitung 16 (Figur 1) verbunden ist.

Wie sich aus den Figuren 2 bis 4 insbesondere ergibt, sind die Kanäle der einzelnen Schichten parallel zueinander ausgerichtet. Weiterhin funktioniert der Verdampfer 20 nach dem Gegenstromprinzip, was bedeutet, daß das zu verdampfende Medium und das Heizmedium eine entgegengesetzte Strömungsrichtung haben. Das die Erhitzungseinrichtung durchströmende Heizmedium gibt die in diesem gespeicherte Wärmeenergie ab, wobei diese Wärmeenergie auf das zu erhitzende Benzin-Wasser-Gemisch übertragen wird.

Wie sich insbesondere aus dem direkten Vergleich der Figuren 2 und 3 ergibt, wird das Heizmedium noch vor der Mischzone 35 für das Benzin und das Wasser abgeleitet. Damit wird der Gefahr eines pulsierenden Siedens sowie einer Vorverkokung des Benzins vorgebeugt. Da über die sandwichartige Verbindung der einzelnen Schichten ein sehr guter Wärmeaustausch zwischen den einzelnen Schichten erfolgt, können sich die einzelnen Medien, beziehungsweise das Mediengemisch, über die Wärmeleitung im Bauteil dennoch in ausreichendem Maße vorerwärmen.

Die einzelnen Schichten der Erhitzungseinrichtung 21, der Durchströmeinrichtung 39 sowie der Mischeinrichtung 28 können vorteilhaft als dünne Metallfolien ausgebildet sein, wobei die entsprechenden Kanäle durch ein Ätzverfahren oder dergleichen in die Folien eingebracht werden können. Die einzelnen Schichten können in beliebiger Weise gestapelt werden, wobei vorzugsweise jeweils eine Mischeinrichtung 28 über beziehungsweise unter einer Durchströmeinrichtung 39 angeordnet ist, da diese beiden Schichten miteinander verbunden sind. Es ist jedoch nicht zwingend notwendig, daß für jede Durchströmeinrichtung 39 auch eine eigene Mischeinrichtung 28 vorgesehen ist. Beispielsweise ist auch denkbar, daß eine Durchströmeinrichtung 39 von zwei Mischeinrichtungen 28 bedient wird. Ebenso ist es nicht zwingend erforderlich, daß jeweils eine Durchströmeinrichtung 39, beziehungsweise eine Kombination aus Durchströmeinrichtung 39 und Mischeinrichtung 28, mit einer Erhitzungseinrichtung 21 verbunden ist. Die Anzahl und Ausgestaltung der einzelnen Schichten ergibt sich je nach Einsatzart und Anforderung an den Verdampfer 20.

Um die im Verdampfer 20 vorherrschenden Temperaturen messen zu können, kann in regelmäßigem Abstand zwischen den einzelnen Schichten wenigstens eine Thermoelement-Schicht 45 vorgesehen sein, wie sie beispielsweise in Figur 5 dargestellt ist. Die Thermoelement-Schicht 45 kann eine Anzahl von Thermoelement-Kanälen 46 aufweisen, in denen entsprechende Thermoelemente 47 angeordnet sind. Je nach Anzahl und Ausgestaltung der Thermoelement-Kanäle 46 sowie der Thermoelemente 47 kann die Temperatur in jedem beliebigen Bereich des Verdampfers 20 gemessen werden.

Nachdem das Benzin-Wasser-Gemisch im Verdampfer 20 verdampft wurde, tritt dieses über den Auslaß 34 aus dem Verdampfer 20 aus und wird über die Leitung 14 in dampfförmigem Zustand in den in Überhitzer 50 eingeleitet. Der Überhitzer 50 besteht wiederum aus einem Schichtverbund aus einer Anzahl von Einzelschichten und wird nun im Zusammenhang mit den Figuren 7 bis 11 näher erläutert.

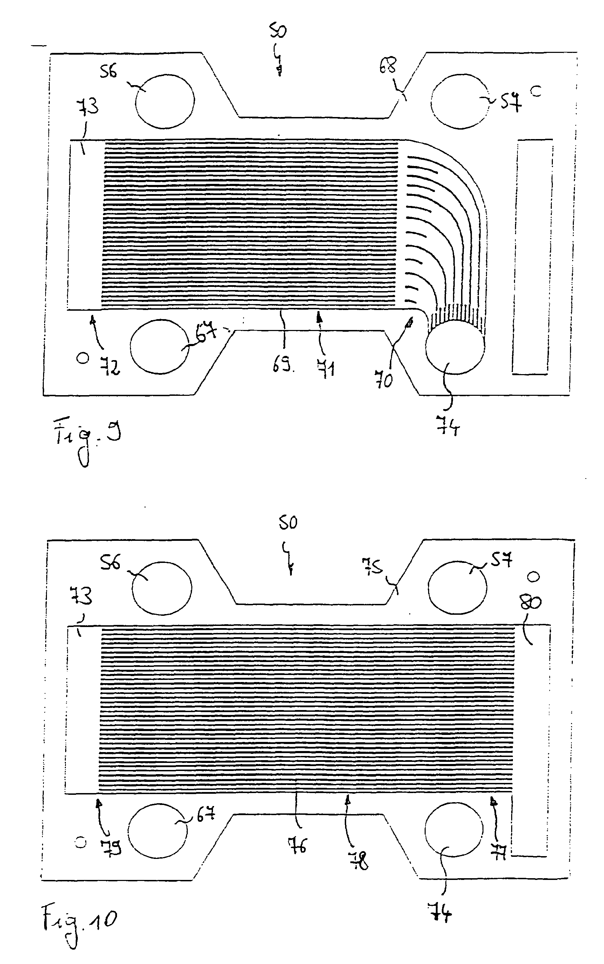

Der in den Figuren 7 bis 11 dargestellte Überhitzer 50 weist vier Grundkomponenten auf. Eine erste Grundkomponente betrifft eine Überhitzungseinrichtung. Die Überhitzungseinrichtung hat die Aufgabe, die für die Überhitzung erforderliche Wärmeenergie zu erzeugen und bereitzustellen. Im vorliegenden Ausführungsbeispiel besteht die Überhitzungseinrichtung aus zwei Einzelschichten 51 und 62, die in den Figuren 7 und 8 dargestellt sind. Eine weitere Komponente des Überhitzers 50 bildet eine Durchströmeinrichtung 68, die in Figur 9 dargestellt ist. Über die Durchströmeinrichtung 68 strömt das aus dem Verdampfer 20 stammende verdampfte Benzin-Wasser-Gemisch. Weiterhin ist im Überhitzer 50 eine zusätzliche Durchströmeinrichtung 75 vorgesehen, über die ein weiteres Medium, im vorliegenden Fall Prozeßluft für den Reformer 11 (Figur 1) durch den Überhitzer 50 hindurchgeleitet und auf die für den Reformierungsprozeß erforderliche Temperatur vorerwärmt wird. Schließlich verfügt der Überhitzer 50 über wenigstens eine Thermoelement-Schicht 81.

Die Überhitzungseinrichtung des Überhitzers 50 ist im vorliegenden Ausführungsbeispiel als katalytischer Brenner ausgebildet. Sowohl die Einzelschicht 51, als auch die Einzelschicht 62 sind in Kanalstruktur ausgebildet und weisen jeweils eine Anzahl von parallel zueinander verlaufenden Kanälen 52 beziehungsweise 63 auf. Die Kanäle 52, 63 können wie beim Verdampfer als Mikrokanäle ausgebildet sein. Der katalytische Brenner funktioniert derart, daß die einzelnen Kanäle zumindest bereichsweise mit einem Katalysatormaterial beschichtet sind. Wenn ein entsprechendes Medium, das mit dem Katalysatormaterial reagieren kann, durch die beschichteten Kanäle hindurchströmt, entsteht eine entsprechende Reaktion, die in der Regel exotherm verläuft, so daß Wärmeenergie frei wird. Die frei werdende Wärmeenergie kann anschließend zur Überhitzung der weiteren Medien verwendet werden. Im vorliegenden Ausführungsbeispiel besteht das Brenngas, das die katalytisch beschichteten Kanäle durchströmt, aus einem aus Wasserstoff und Verbrennungsluft bestehenden Gasgemisch.

Der Wasserstoff wird über die Einzelschicht 51 eingebracht. Dazu sind entsprechende Kanäle 53 mit einem Wasserstoff-Einlaß 56 verbunden. Der Einlaß 56 wiederum ist mit der Wasserstoffzuleitung 17 (Figur 1) verbunden. Wie insbesondere aus Figur 8 ersichtlich ist, wird die Verbrennungsluft über einen entsprechenden Einlaß 67 in die Eintrittsbereiche 64 der Kanäle 63 in der Einzelschicht 62 eingeleitet. Der Einlaß 67 ist mit der Verbrennungsluft-Zuleitung 18 (Figur 1) verbunden. Die Herstellung des Brenngasgemischs erfolgt in ähnlicher Weise wie bei der Herstellung des Benzin-Wasser-Gemischs im Verdampfer, so daß bezüglich der grundsätzlichen Funktionsweise ebenfalls auf die Ausführungen zu den Figuren 3, 4 und 6 Bezug genommen und hiermit verwiesen wird. Der über die Kanäle 53 eintretende Wasserstoff prallt gegen ein Barriereelement 59 und wird über entsprechende Verbindungsöffnungen 60 aus den Kanälen 53 in die unter der Einzelschicht 51 befindlichen Kanäle 63 der Einzelschicht 62 hineingedrückt. In diesem Bereich, der als Mischzone 58 ausgebildet ist, findet anschließend die Vermischung zwischen dem Wasserstoff und der Verbrennungsluft statt. Das Wasserstoff-Verbrennungsluft-Gemisch durchströmt anschließend die Reaktionsbereiche 65 der Kanäle 63 in der Einzelschicht 62. Weiterhin sind auch in der Einzelschicht 51 hinter der Barriere 59 Kanäle 52 vorgesehen. Die Kanäle 52 sind - wie beim Verdampfer 20 beschrieben - über Verbindungsöffnungen 61 mit den Kanälen 63 verbunden, so daß für das Wasserstoff-Verbrennungsluft-Gemisch zwei übereinander liegende Strömungspassagen zur Verfügung stehen, was mögliche Druckverluste positiv beeinflußt.

Sowohl die Kanäle 63 als auch die Kanäle 52 weisen Reaktionsbereiche 65 beziehungsweise 54 auf, die mit katalytischem Material beschichtet sind. Wenn nun das Wasserstoff-Verbrennungsluft-Gemisch in die katalytisch beschichteten Bereiche eintritt, findet die weiter oben beschriebene exotherme Reaktion statt. Die dabei frei werdende Wärmeenergie kann zur Überhitzung der zu überhitzenden Medien verwendet werden. Das Brenngas wird schließlich über entsprechende Austrittsbereiche 55, 66 der Kanäle 52, 63 zu einem Heizmediumauslaß 57 geführt und von diesem über die Heizmediumleitung 15 (Figur 1) in den Verdampfer 20 geleitet, wo das Heizmedium zum Verdampfen des Wasser-Benzin-Gemischs weiter verwertet wird.

Wie aus Figur 9 ersichtlich wird, tritt das im Verdampfer 20 verdampfte Benzin-Wasser-Gemisch über einen Mediumeinlaß 74 in die Durchströmeinrichtung 68 ein. Die Durchströmeinrichtung 68 weist wiederum Kanalstruktur auf und verfügt über eine Anzahl parallel zueinander ausgerichteter Kanäle 69. Die Kanäle 69, die vorteilhaft wiederum als Mikrokanäle ausgebildet sind, sind über ihre Eintrittsbereiche 70 mit dem Mediumeinlaß 74 verbunden. An die Eintrittsbereiche 70 schließen sich die Reaktionsbereiche 71 an, in denen die eigentliche Überhitzung stattfindet. Die Austrittsbereiche 72 sind im vorliegenden Ausführungsbeispiel als Mischkammer 73 ausgebildet.

In ähnlicher Weise ist die Durchströmeinrichtung 75 gemäß Figur 10 ausgebildet. Auch hier sind wiederum eine Reihe von parallel zueinander ausgerichteten Kanälen 76 vorgesehen, die vorzugsweise in Form von Mikrokanälen ausgebildet sind. Die Kanäle 76 sind in ihrem Eintrittsbereich 77 mit einem Mediumeinlaß 80 verbunden. Im vorliegenden Beispiel wird über den Mediumeinlaß 80 Prozeßluft für den Reformer eingeleitet, die vor Eintritt in den Reformer auf eine geeignete Prozeßtemperatur gebracht werden soll. Der Austrittsbereich 79 der Kanäle 76 ist ebenfalls als Mischkammer 73 ausgebildet. Auf diese Weise wird erreicht, daß die Prozeßluft sowie das verdampfte Benzin-Wasser-Gemisch noch vor Eintritt in den Reformer innerhalb des Überhitzers 50 vermischt werden. Auf diese Weise wird in den Reformer ein homogen vermischtes Gemisch eingespeist, das eine gleichmäßige Temperatur aufweist.

Ähnlich wie beim Verdampfer 20 ist die Überhitzungseinrichtung im Vergleich zu den Durchströmeinrichtungen derart ausgebildet, daß das Heizgas vor der über den Einlaß 80 eintretenden Prozeßluft über den Auslaß 57 abgeleitet wird (Gegenstromprinzip). Dennoch wird über die auftretende Wärmeleitung im gesamten Überhitzer 50 eine ausreichende Vorerwärmung der Prozeßluft ermöglicht. Durch diese indirekte Vorerwärmung der Prozeßluft wird sichergestellt, daß die Prozeßluft keine Kühlwirkung auf das über den Einlaß 74 eintretende Benzin-Wasserdampf-Gemisch hat. Eine auftretende Kühlwirkung könnte nämlich zu einer wie weiter oben bereits beschriebenen nachteiligen Verkokung führen.

Ähnlich wie beim Verdampfer 20 ist die Erfindung nicht auf eine bestimmte Anzahl beziehungsweise Anordnung der einzelnen Schichten des Überhitzers 50 beschränkt. Vorzugsweise bilden die Einzelschichten 51, 62 wiederum eine Einheit, da diese über die Verbindungsöffnungen 60, 61 miteinander verbunden sind. Dabei kann entweder vorgesehen sein, daß jeweils eine Einzelschicht 62 mit einer Einzelschicht 51 eine Einheit bildet. Ebenso ist es denkbar, daß eine Einzelschicht 62 sandwichartig zwischen zwei Einzelschichten 51 angeordnet ist oder umgekehrt. Die Anordnung und Anzahl der jeweils verwendeten Schichten ergibt sich je nach Einsatzgebiet und Leistungsanforderungen an den Überhitzer 50.

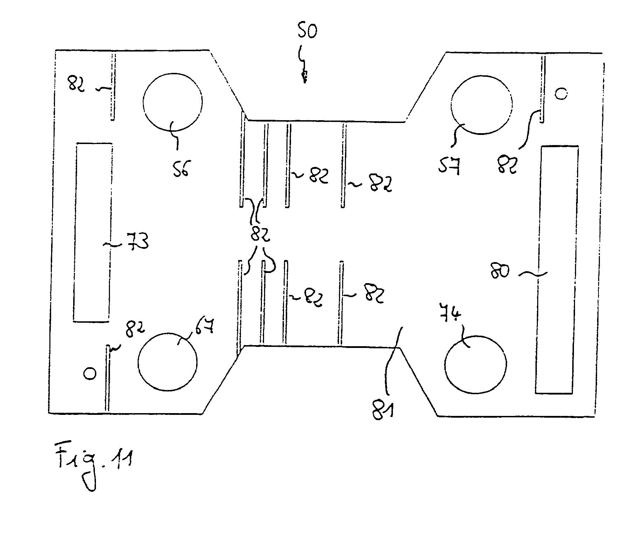

Um die im Überhitzer 50 vorherrschenden Temperaturen messen und gegebenenfalls regulieren zu können, kann im Überhitzerstapel 50 in regelmäßigen Abständen eine Thermoelement-Schicht 81 vorgesehen sein, wie sie beispielhaft in Figur 11 dargestellt ist. Die Thermoelement-Schicht 81 verfügt wiederum über Thermoelement-Kanäle 82, in denen geeignete Thermoelemente (nicht dargestellt) integriert sind. Die Einstellung und Variation der Überhitzungstemperaturen kann beispielsweise über die Zuleitungsmenge an Wasserstoff und Verbrennungsluft und damit über deren Verhältnis und/oder Gesamtmassenstrom reguliert werden.

Durch die erfindungsgemäße Vorrichtung zum Verdampfen und Überhitzen wenigstens eines Mediums wird eine konstruktiv einfache und kompakte Möglichkeit geschaffen, einzelne Medien oder Mediengemische sowohl zu verdampfen, als auch auf für weitere Prozesse erforderliche Temperaturen zu überhitzen. Eine Überhitzung ist insbesondere dann von Vorteil, wenn für die Durchführung nachfolgender Prozesse definierte und möglicherweise nachregelbare Temperaturen erforderlich sind. Beides kann mit der erfindungsgemäßen Vorrichtung realisiert werden. Eine Regulierung von Temperaturen ist dabei auf besonders einfache Weise möglich, da sich diese in erster Linie aus der Regulierung einzelner Massenströme beziehungsweise aus der prozentualen Einstellung einzelner Komponenten in Gemischen ergibt.

### Bezugszeichenliste

- 10 =: Vorrichtung zum Erzeugen/Aufbereiten von Brennstoff für eine Brennstoffzelle
- 11 =: Reformer
- 12 =: Zuleitung für Wasser
- 13 =: Zuleitung für Benzin
- 14 =: Leitung für verdampftes Medium
- 15 =: Leitung für Heizmedium
- 16 =: Ableitung für Heizmedium
- 17 =: Leitung für Brennstoff
- 18 =: Leitung für Verbrennungsluft
- 19 =: Leitung für Prozeßluft

- 20 =: Verdampfer
- 21 =: Erhitzungseinrichtung/Schicht
- 22 =: Kanal
- 23 =: Eintrittsbereich
- 24 =: Reaktionsbereich
- 25 =: Austrittsbereich
- 26 =: Einlaß Heizmedium
- 27 =: Auslaß Heizmedium
- 28 =: Mischeinrichtung/Schicht
- 29 =: Kanal
- 30 =: Kanal
- 31 =: Reaktionsbereich
- 32 =: Austrittsbereich
- 33 =: Einlaß Medium (Benzin)
- 34 =: Auslaß verdampftes Medium
- 35 =: Mischzone
- 36 =: Barriereelement
- 37 =: Verbindungsöffnung
- 38 =: Verbindungsöffnung
- 39 =: Durchströmeinrichtung/Schicht
- 40 =: Kanal
- 41 =: Eintrittsbereich
- 42 =: Reaktionsbereich
- 43 =: Austrittsbereich
- 44 =: Einlaß Medium (Wasser)
- 45 =: Thermoelement-Schicht
- 46 =: Thermoelement-Kanal
- 47 =: Thermoelement

- 50 =: Überhitzer
- 51 =: Überhitzungseinrichtung/Schicht
- 52 =: Kanal
- 53 =: Kanal
- 54 =: Reaktionsbereich
- 55 =: Austrittsbereich
- 56 =: Wasserstoff-Einlaß
- 57 =: Heizmedium-Auslaß
- 58 =: Mischzone
- 59 =: Barriereelement
- 60 =: Verbindungsöffnung
- 61 =: Verbindungsöffnung
- 62 =: Überhitzungseinrichtung/Schicht
- 63 =: Kanal
- 64 =: Eintrittsbereich
- 65 =: Reaktionsbereich
- 66 =: Austrittsbereich
- 67 =: Verbrennungsluft-Einlaß
- 68 =: Durchströmeinrichtung/Schicht
- 69 =: Kanal
- 70 =: Eintrittsbereich
- 71 =: Reaktionsbereich
- 72 =: Austrittsbereich
- 73 =: Mischkammer
- 74 =: Medium-Einlaß
- 75 =: Durchströmeinrichtung/Schicht
- 76 =: Kanal
- 77 =: Eintrittsbereich
- 78 =: Reaktionsbereich
- 79 =: Austrittsbereich
- 80 =: Medium-Einlaß
- 81 =: Thermoelement-Schicht
- 82 =: Thermoelement-Kanal

- S =: Strömungsrichtung eines Mediums

## Patentansprüche

1. Vorrichtung zum Verdampfen und Überhitzen wenigstens eines Mediums, mit wenigstens zwei Reaktionsstufen, wobei wenigstens eine erste Reaktionsstufe als Verdampfer (20) zum zumindest teilweisen Verdampfen des wenigstens einen Mediums ausgebildet ist, mit wenigstens einer Durchströmeinrichtung (39) zum Hindurchleiten des zu verdampfenden Mediums und mit wenigstens einer Erhitzungseinrichtung (21) zum Bereitstellen von Wärmeenergie zum zumindest teilweisen Verdampfen des die Durchströmeinrichtung (39) durchströmenden Mediums, wobei die Durchströmeinrichtung (39) mit der Erhitzungseinrichtung (21) thermisch gekoppelt ist, und wobei wenigstens eine, der wenigstens einen ersten Reaktionsstufe in Strömungsrichtung (S) des Mediums nachfolgende zweite Reaktionsstufe als Überhitzer (50) zum Überhitzen des verdampften Mediums oder zum vollständigen Verdampfen und Überhitzen des teilweise verdampften Mediums ausgebildet ist, mit wenigstens einer Durchströmeinrichtung (68) des Überhitzens zum Hindurchleiten des aus dem Verdampfer (20) austretenden Mediums und mit wenigstens einer Überhitzungseinrichtung (51, 62) zum Bereitstellen von Wärmeenergie zum Überhitzen des die Durchströmeinrichtung (68) durchströmenden Mediums auf eine bestimmte Temperatur oder zum restlosen Verdampfen des Mediums und zum Überhitzen des Mediums auf eine bestimmte Temperatur, wobei die Durchströmeinrichtung des Überhitzens (68) mit der Überhitzungseinrichtung (51, 62) thermisch gekoppelt ist, wobei der wenigstens eine Verdampfer (20) und der wenigstens eine Überhitzer (50) als Schichtverbund aus Einzelschichten gebildet ist, wobei die Durchströmeinrichtung (39) des Verdampfers (20) sowie die Durchströmeinrichtung (68) des Überhitzers (50) wenigstens eine Schicht mit Kanalstruktur mit wenigstens einem Kanal (40, 69) aufweist, und wobei zumindest eine Schicht der Durchströmeinrichtung (39) des Verdampfers (20) mit wenigstens einer schichtförmigen Erhitzungseinrichtung (21) und zumindest eine Schicht der Durchströmeinrichtung (68) des Überhitzers (50) mit wenigstens einer schichtförmigen Überhitzungseinrichtung (51, 62) verbunden ist,
**dadurch gekennzeichnet,**
**daß** der Verdampfer (20) eine Mischeinrichtung (28) zum Hinzumischen wenigstens eines weiteren Mediums zum zu verdampfenden Medium aufweist, wobei die Mischeinrichtung (28) schichtförmig ausgebildet ist, wobei die Mischeinrichtung (28) wenigstens eine Schicht mit wenigstens einem Kanal (30) aufweist, und wobei der wenigstens eine Kanal (30) der Mischeinrichtung (28) in Strömungsrichtung (S) des Mediums durch ein Barriereelement (36) begrenzt ist und der wenigstens eine Kanal (30) der Mischeinrichtung (28) mit dem Eintrittsbereich (41) des wenigstens einen Kanals (40) der Durchströmeinrichtung (39) des Verdampfers (20) verbunden ist.

2. Vorrichtung nach Anspruch 1, **dadurch gekennzeichnet, daß** der wenigstens eine Kanal (40, 69) jeder Durchströmeinrichtung (39, 68) einen Eintrittsbereich (41, 70), einen Reaktionsbereich (42, 71) sowie einen Austrittsbereich (43, 72) aufweist.

3. Vorrichtung nach Anspruch 1 oder 2, **dadurch gekennzeichnet, daß** der Verdampfer (20) und/oder der Überhitzer (50) in Mikrostrukturtechnik ausgebildet ist/sind.

4. Vorrichtung nach einem der Ansprüche 1 bis 3, **dadurch gekennzeichnet, daß** zumindest einzelne Schichten des Verdampfers (20) und/oder Überhitzers (50) als Folien ausgebildet sind.

5. Vorrichtung nach einem der Ansprüche 1 bis 4, **dadurch gekennzeichnet, daß** die schichtförmige Erhitzungseinrichtung (21) des Verdampfers (20) wenigstens einen Kanal (22) zum Hindurchleiten eines Heizmediums aufweist.

6. Vorrichtung nach Anspruch 5, **dadurch gekennzeichnet, daß** die Kanäle (22, 40) der Durchströmeinrichtung (39) und der Erhitzungseinrichtung (21) parallel zueinander ausgerichtet sind.

7. Vorrichtung nach Anspruch 1, **dadurch gekennzeichnet, daß** die Mischeinrichtung (28) im Eintrittsbereich (41) des wenigstens einen Kanals (40) der Durchströmeinrichtung (39) des Verdampfers (20) vorgesehen ist.

8. Vorrichtung nach einem der Ansprüche 2 bis 7, **dadurch gekennzeichnet, daß** die Erhitzungseinrichtung (21) zum Erhitzen des Mediums im Reaktionsbereich (42) des wenigstens einen Kanals (40) der Durchströmeinrichtung (39) des Verdampfers (20) ausgebildet ist.

9. Vorrichtung nach Anspruch 8, **dadurch gekennzeichnet, dass** das die Erhitzungseinrichtung (21) durchströmende Heizmedium über einen Auslaß (27) in Bezug auf die Strömungsrichtung des Heizmediums zwischen dem Ende des Reaktionsbereichs (24) der Erhitzungseinrichtung (21) und der Mischzone (35) der Durchströmeinrichtung (39) abgeführt wird.

10. Vorrichtung nach einem der Ansprüche 1 bis 9, **dadurch gekennzeichnet, dass** die Erhitzungseinrichtung (21) des Verdampfers (20) mit einem Heizmediumauslaß (57) aus dem Überhitzer (50) verbunden ist.

11. Vorrichtung nach einem der Ansprüche 1 bis 10, **dadurch gekennzeichnet, daß** der Verdampfer (20) wenigstens ein Thermoelement (47) aufweist und daß das Thermoelement (47) vorzugsweise in einer Thermoelement-Schicht (45) angeordnet ist.

12. Vorrichtung nach einem der Ansprüche 1 bis 11, **dadurch gekennzeichnet, daß** die schichtförmige Überhitzungseinrichtung (51, 62) des Überhitzers (50) wenigstens einen Kanal (53, 63) zum Hindurchleiten eines Überhitzungsmediums aufweist.

13. Vorrichtung nach einem der Ansprüche 1 bis 12, **dadurch gekennzeichnet, daß** die Überhitzungseinrichtung (51, 62) als katalytischer Brenner ausgebildet ist.

14. Vorrichtung nach Anspruch 12 oder 13, **dadurch gekennzeichnet, daß** die Überhitzungseinrichtung (50) aus wenigstens zwei Einzelschichten (51, 62) gebildet ist, daß jede Einzelschicht (51, 62) wenigstens einen Kanal (53, 63) aufweist, und daß die Kanäle (53, 63) der Einzelschichten (51, 62) in einer Mischzone (58) miteinander verbunden sind.

15. Vorrichtung nach Anspruch 14, **dadurch gekennzeichnet, daß** der wenigstens eine Kanal (53) von einer der Einzelschichten (51) durch ein Barriereelement (59) begrenzt ist und daß der Kanal (53) mit einem Eintrittsbereich (64) des wenigstens einen Kanals (63) der anderen Einzelschicht (62) verbunden ist.

16. Vorrichtung nach einem der Ansprüche 1 bis 15, **dadurch gekennzeichnet, daß** der Überhitzer (50) wenigstens eine schichtförmige Durchströmeinrichtung (75) für ein weiteres Medium aufweist, und daß die Durchströmeinrichtung (75) eine Kanalstruktur mit wenigstens einem Kanal (76) aufweist.

17. Vorrichtung nach einem der Ansprüche 1 bis 16, **dadurch gekennzeichnet, daß** die Überhitzungseinrichtung (51, 62) zum Überhitzen des wenigstens einen Mediums im Reaktionsbereich (71, 78) des wenigstens einen Kanals (69, 76) der Durchströmeinrichtung (68, 75) ausgebildet ist.

18. Vorrichtung nach Anspruch 17, **dadurch gekennzeichnet, daß** das die Überhitzungseinrichtung (51, 62) durchströmende Heizmedium über einen Auslaß (57) in Bezug auf die Strömungsrichtung des Heizmediums zwischen dem Ende des Reaktionsbereichs (54, 65) der Überhitzungseinrichtung (51, 62) und dem Einlaß (80) des wenigstens einen weiteren Mediums der Durchströmeinrichtung (en) (68, 75) abgeführt wird.

19. Vorrichtung nach einem der Ansprüche 1 bis 18, **dadurch gekennzeichnet, daß** der Überhitzer (50) wenigstens ein Thermoelement aufweist und daß das Thermoelement vorzugsweise in einer Thermoelement-Schicht (81) angeordnet ist.

20. Brennstoffzellensystem, mit wenigstens einer Brennstoffzelle und mit einer der Brennstoffzelle vorgeschalteten Vorrichtung (10) zum Erzeugen/Aufbereiten eines Brennstoffs,
**dadurch gekennzeichnet,**
**daß** die Vorrichtung (10) zum Erzeugen/Aufbereiten des Brennstoffs wenigstens eine Vorrichtung zum Verdampfen und Überhitzen wenigstens eines Mediums nach einem der Ansprüche 1 bis 19 aufweist.

## Claims

1. Apparatus for evaporating and superheating at least one medium, having at least two reaction stages, wherein at least one first reaction stage is constructed as an evaporator (20) for at least partial evaporation of the at least one medium, having at least one throughflow device (39) for conveying the medium that is to be evaporated and having at least one heating device (21) for providing heating energy for at least partially evaporating the medium flowing through the throughflow device (39), the throughflow device (39) being thermally coupled to the heating device (21), and wherein at least one second reaction stage following the at least one first reaction stage in the direction of flow (S) of the medium is constructed as a superheater (50) for superheating the evaporated medium or for totally evaporating and superheating the partly evaporated medium, having at least one throughflow device (68) of the superheater for conveying the medium leaving the evaporator (20) and having at least one superheating device (51, 62) for providing heating energy for superheating the medium flowing through the throughflow device (68) to a specific temperature or for totally evaporating the medium and for superheating the medium to a specific temperature, wherein the throughflow device (68) of the superheater is thermally coupled to the superheating device (51, 62), wherein the at least one evaporator (20) and the at least one superheater (50) is formed as a composite layered structure comprising individual layers, the throughflow device (39) of the evaporator (20) and the throughflow device (68) of the superheater (50) having at least one layer with a channel structure having at least one channel (40, 69), and wherein at least one layer of the throughflow device (39) of the evaporator (20) is connected to at least one layered heating device (21) and at least one layer of the throughflow device (68) of the superheater (50) is connected to at least one layered superheating device (51, 62),
**characterised in that**
the evaporator (20) comprises a mixing device (28) for mixing at least one further medium in with the medium that is to be evaporated, the mixing device (28) being layered in structure, the mixing device (28) having at least one layer with at least one channel (30), and wherein the at least one channel (30) of the mixing device (28) is bounded by a barrier element in the direction of flow (S) of the medium and the at least one channel (30) of the mixing device (28) is connected to the entry region (41) of the at least one channel (40) of the throughflow device (39) of the evaporator (20).

2. Apparatus according to claim 1, **characterised in that** the at least one channel (40, 69) of each throughflow device (39, 68) comprises an entry region (41, 70), a reaction region (42, 71) and an exit region (43, 72).

3. Apparatus according to claim 1 or 2, **characterised in that** the evaporator (20) and/or the superheater (50) is/are constructed by microstructure technology.

4. Apparatus according to one of claims 1 to 3, **characterised in that** at least individual layers of the evaporator (20) and/or superheater (50) are constructed as films or foils.

5. Apparatus according to one of claims 1 to 4, **characterised in that** the layered heating device (21) of the evaporator (20) comprises at least one channel (22) for conveying a heating medium.

6. Apparatus according to claim 5, **characterised in that** the channels (22, 40) of the throughflow device (39) and the heating device (21) are aligned parallel to one another.

7. Apparatus according to claim 1, **characterised in that** the mixing device (28) is provided in the entry region (41) of the at least one channel (40) of the throughflow device (39) of the evaporator (20).

8. Apparatus according to one of claims 2 to 7, **characterised in that** the heating device (21) for heating the medium is formed in the reaction region (42) of the at least one channel (40) of the throughflow device (39) of the evaporator (20).

9. Apparatus according to claim 8, **characterised in that** the heating medium flowing through the heating device (21) is discharged through an outlet (27) in relation to the direction of flow of the heating medium between the end of the reaction region (24) of the heating device (21) and the mixing zone (35) of the throughflow device (39).

10. Apparatus according to one of claims 1 to 9, **characterised in that** the heating device (21) of the evaporator (20) is connected to an outlet (57) for heating medium from the superheater (50).

11. Apparatus according to one of claims 1 to 10, **characterised in that** the evaporator (20) comprises at least one thermocouple (47) and **in that** the thermocouple (47) is preferably arranged in a thermocouple layer (45).

12. Apparatus according to one of claims 1 to 11, **characterised in that** the layered superheating device (51, 62) of the superheater (50) comprises at least one channel (53, 63) for conveying a superheating medium.

13. Apparatus according to one of claims 1 to 12, **characterised in that** the superheating device (51, 62) is constructed as a catalytic burner.

14. Apparatus according to claim 12 or 13, **characterised in that** the superheating device (50) is formed from at least two individual layers (51, 62), **in that** each individual layer (51, 62) has at least one channel (53, 63) and **in that** the channels (53, 63) of the individual layers (51, 62) are joined together in a mixing zone (58).

15. Apparatus according to claim 14, **characterised in that** the at least one channel (53) of one of the individual layers (53) is bounded by a barrier element (59) and **in that** the channel (53) is connected to an entry region (64) of the at least one channel (63) of the other individual layer (62).

16. Apparatus according to one of claims 1 to 15, **characterised in that** the superheater (50) comprises at least one layered throughflow device (75) for a further medium, and **in that** the throughflow device (75) has a channel structure with at least one channel (76).

17. Apparatus according to one of claims 1 to 16, **characterised in that** the superheating device (51, 62) for heating the at least one medium is formed in the reaction region (71, 78) of the at least one channel (69, 76) of the throughflow device (68, 75).

18. Apparatus according to claim 17, **characterised in that** the heating medium flowing through the superheating device (51, 62) is discharged through an outlet (57) in relation to the direction of flow of the heating medium between the end of the reaction region (54, 65) of the superheating device (51, 62) and the inlet (80) of the at least one further medium of the throughflow device(s) (68, 75).

19. Apparatus according to one of claims 1 to 18, **characterised in that** the superheater (50) comprises at least one thermocouple and **in that** the thermocouple is preferably arranged in a thermocouple layer (81).

20. Fuel cell system, having at least one fuel cell and having an apparatus (10) connected upstream of the fuel cell for generating/preparing a fuel,
**characterised in that** the apparatus (10) for generating/preparing the fuel has at least one apparatus for evaporating and superheating at least one medium according to one of claims 1 to 19.

## Revendications

1. Dispositif d'évaporation et de surchauffe d'au moins un milieu, comprenant au moins deux degrés de réaction, au moins un premier degré de réaction étant conçu comme un évaporateur (20) destiné à évaporer au moins en partie le au moins un milieu, comprenant au moins un dispositif de traversée (39) destiné à faire traverser le milieu à évaporer et comprenant au moins un dispositif de chauffage (21) destiné à mettre à disposition de l'énergie calorifique destinée à évaporer au moins en partie le milieu traversant le dispositif de traversée (39), le dispositif de traversée (39) étant couplé thermiquement au dispositif de chauffage (21), et au moins un second degré de réaction placé en aval du au moins un premier degré de réaction dans le sens d'écoulement (S) du milieu étant conçu comme surchauffeur (50) destiné à surchauffer le milieu évaporé ou à évaporer entièrement et surchauffer le milieu en partie évaporé, comprenant au moins un dispositif de traversée (68) du surchauffeur destiné à faire traverser le milieu sortant de l'évaporateur (20) et comprenant au moins un dispositif de surchauffe (51, 62) destiné à mettre à disposition de l'énergie calorifique destinée à surchauffer le milieu traversant le dispositif de traversée (68) à une température définie ou à évaporer le reste du milieu et à surchauffer le milieu à une température définie, le dispositif de traversée (68) du surchauffeur étant couplé thermiquement au dispositif de surchauffe (51, 62), le au moins un évaporateur (20) et le au moins un surchauffeur (50) étant formés comme un composite à couches fait de couches individuelles, le dispositif de traversée (39) de l'évaporateur (20) ainsi que le dispositif de traversée (68) du surchauffeur (50) comprenant au moins une couche dotée d'une structure de canal avec au moins un canal (40, 69), et au moins une couche du dispositif de traversée (39) de l'évaporateur (20) étant reliée à au moins un dispositif de chauffage (21) en forme de couche et au moins une couche du dispositif de traversée (68) du surchauffeur (50) étant reliée à au moins un dispositif de surchauffe (51, 62) en forme de couche,
**caractérisé en ce**
**que** l'évaporateur (20) comprend un dispositif de mélange (28) destiné à mélanger au moins un autre milieu au milieu à évaporer en l'introduisant, le dispositif de mélange (28) étant conçu en forme de couche, le dispositif de mélange (28) comprenant au moins une couche dotée d'au moins un canal (30), et le au moins un canal (30) du dispositif de mélange (28) dans le sens d'écoulement (S) du milieu étant limité par un élément barrière (36) et le au moins un canal (30) du dispositif de mélange (28) étant relié à la zone d'entrée (41) du au moins un canal (40) du dispositif de traversée (39) de l'évaporateur (20).

2. Dispositif selon la revendication 1, **caractérisé en ce que** le au moins un canal (40, 69) de chaque dispositif de traversée (39, 68) comprend une zone d'entrée (41, 70), une zone de réaction (42, 71) ainsi qu'une zone de sortie (43, 72).

3. Dispositif selon la revendication 1 ou 2, **caractérisé en ce que** l'évaporateur (20) et/ou le surchauffeur (50) est/sont conçus par technique de microstructuration.

4. Dispositif selon l'une quelconque des revendications 1 à 3, **caractérisé en ce qu'**au moins des couches individuelles de l'évaporateur (20) et/ou du surchauffeur (50) sont conçues comme des feuilles.

5. Dispositif selon l'une quelconque des revendications 1 à 4, **caractérisé en ce que** le dispositif de chauffage en forme de couche (21) de l'évaporateur (20) comprend au moins un canal (22) destiné à faire traverser un milieu chauffant.

6. Dispositif selon la revendication 5, **caractérisé en ce que** les canaux (22, 40) du dispositif de traversée (39) et du dispositif de chauffage (21) sont orientés parallèlement l'un à l'autre.

7. Dispositif selon la revendication 1, **caractérisé en ce que** le dispositif de mélange (28) est prévu dans la zone d'entrée (41) du au moins un canal (40) du dispositif de traversée (39) de l'évaporateur (20).

8. Dispositif selon l'une quelconque des revendications 2 à 7, **caractérisé en ce que** le dispositif de chauffage (21) est conçu pour chauffer le milieu dans la zone de réaction (42) du au moins un canal (40) du dispositif de traversée de l'évaporateur (20).

9. Dispositif selon la revendication 8, **caractérisé en ce que** le milieu chauffant traversant le dispositif de chauffage (21) est évacué par une sortie (27) par rapport au sens d'écoulement du milieu chauffant entre l'extrémité de la zone de réaction (24) du dispositif de chauffage (21) et de la zone de mélange (35) du dispositif de traversée (39).

10. Dispositif selon l'une quelconque des revendications 1 à 9, **caractérisé en ce que** le dispositif de chauffage (21) de l'évaporateur (20) est relié à une sortie de milieu chauffant (57) provenant du surchauffeur (50).

11. Dispositif selon l'une quelconque des revendications 1 à 10, **caractérisé en ce que** l'évaporateur (20) comprend au moins un thermocouple (47) et **en ce que** le thermocouple (47) est disposé de préférence dans une couche de thermocouple (45).

12. Dispositif selon l'une quelconque des revendications 1 à 11, **caractérisé en ce que** le dispositif de surchauffe en forme de couche (51, 62) du surchauffeur (50) comprend au moins un canal (53, 63) destiné à faire traverser un milieu de surchauffe.

13. Dispositif selon l'une quelconque des revendications 1 à 12, **caractérisé en ce que** le dispositif de surchauffe (51, 62) est conçu comme un brûleur catalytique.

14. Dispositif selon la revendication 12 ou 13, **caractérisé en ce que** le dispositif de surchauffe (50) est formé d'au moins deux couches individuelles (51, 62), **en ce que** chaque couche individuelle (51, 62) comprend au moins un canal (53, 63), et **en ce que** les canaux (53, 63) des couches individuelles (51, 62) sont reliés l'un à l'autre dans une zone de mélange (58).

15. Dispositif selon la revendication 14, **caractérisé en ce que** le au moins un canal (53) d'une des couches individuelles (51) est limité par un élément barrière (59) et **en ce que** le canal (53) est relié à une zone d'entrée (64) du au moins un canal (63) de l'autre couche individuelle (62).

16. Dispositif selon l'une quelconque des revendications 1 à 15, **caractérisé en ce que** le surchauffeur (50) comprend au moins un dispositif de traversée en forme de couche (75) pour un autre milieu, et **en ce que** le dispositif de traversée (75) comprend une structure de canal dotée d'au moins un canal (76).

17. Dispositif selon l'une quelconque des revendications 1 à 16, **caractérisé en ce que** le dispositif de surchauffe (51, 62) est conçu pour surchauffer le au moins un milieu dans la zone de réaction (71, 78) du au moins un canal (69, 76) du dispositif de traversée (68, 75).

18. Dispositif selon la revendication 17, **caractérisé en ce que** le milieu chauffant traversant le dispositif de surchauffe (51, 62) est évacué par une sortie (57) par rapport au sens d'écoulement du milieu chauffant entre l'extrémité de la zone de réaction (54, 65) du dispositif de surchauffe (51, 62) et l'entrée (80) du au moins un autre milieu du(des) dispositif(s) de traversée (68, 75).

19. Dispositif selon l'une quelconque des revendications 1 à 18, **caractérisé en ce que** le surchauffeur (50) comprend au moins un thermocouple et **en ce que** le thermocouple est disposé de préférence dans une couche de thermocouple (81).

20. Système de pile à combustible, comprenant au moins une pile à combustible et comprenant un dispositif (10) monté en amont de la pile à combustible destiné à produire/préparer le combustible,
**caractérisé en ce**
**que** le dispositif (10) destiné à produire/préparer le combustible comprend au moins un dispositif destiné à évaporer et surchauffer au moins un milieu selon l'une quelconque des revendications 1 à 19.
